# EUROPÄISCHE PATENTSCHRIFT

(11) **EP 2 882 598 B1**
(45) Veröffentlichungstag und Bekanntmachung des Hinweises auf die Patenterteilung: **29.06.2016**
(21) Anmeldenummer: 13750265.4
(22) Anmeldetag: 05.08.2013
(51) Int. Cl.: B42D 15/00

(54) **SICHERHEITSELEMENT MIT FARBEFFEKTERZEUGENDER STRUKTUR**
SECURITY ELEMENT HAVING A STRUCTURE CREATING COLOUR EFFECTS
ÉLÉMENT DE SÉCURITÉ COMPORTANT UNE STRUCTURE PRODUISANT UN EFFET COLORÉ

(30) Priorität: 10.08.2012 DE 102012015900
(43) Veröffentlichungstag der Anmeldung: 17.06.2015
(73) Patentinhaber: Giesecke & Devrient GmbH, 81677 München (DE)
(72) Erfinder: LOCHBIHLER, Hans, 80337 München (DE)
(86) Internationale Anmeldenummer: PCT/EP2013/002338
(87) Internationale Veröffentlichungsnummer: WO 2014/023415

(56) Entgegenhaltungen:
- EP-A1- 0 271 673
- WO-A1-2011/082761
- FR-A1- 2 967 089

## Beschreibung

Die Erfindung betrifft ein Sicherheitselement für einen Wertgegenstand, das aufweist einen flächen, transparenten Körper mit einer Vorder- und einer Rückseite, zwischen denen eine Mittelebene liegt, einen am Körper ausgebildeten, ersten Bereich und einen am Körper ausgebildeten, zweiten Bereich, die ein Motiv codieren, wobei der Körper im ersten Bereich eine Grundelementstruktur aufweist, die in Draufsicht auf den Körper von Vorder- und Rückseite unterschiedliche Farbeindrücke vermittelt.

Sicherheitselemente von Wertdokumenten mit periodischen Liniengittern sind bekannt, beispielsweise aus der DE 102009012299 A1, DE 102009012300 A1 oder der DE 102009056933 A1. Sie können im Subwellenlängenbereich Farbfiltereigenschaften aufweisen, wenn das Gitter hinsichtlich des Gitterprofils so ausgelegt ist, dass Resonanzeffekte im sichtbaren Wellenlängenbereich auftreten. Solche Farbfiltereigenschaften sind sowohl für reflektierende als auch für transmittierende Subwellenlängenstrukturen bekannt. Diese Strukturen haben einen stark polarisierenden Einfluss auf die Reflexion bzw. die Transmission eines einfallenden Lichtstrahls. Die Farbe ist in Reflexion bzw. Transmission solcher Subwellenlängengitter relativ stark winkelabhängig. Jedoch schwächt sich die Farbsättigung für diese Gitter deutlich ab, wenn das einfallende Licht unpolarisiert ist.

Es ist ein Liniengitter mit Subwellenlängenstrukturen bekannt, welches winkelabhängige, farbfilternde Eigenschaften besitzt. Das Liniengitter besitzt ein Rechteckprofil aus einem dielektrischen Material. Die waagrechten Flächen sind mit einem hochbrechenden Dielektrikum überzogen. Oberhalb dieser Struktur befindet sich ebenfalls ein dielektrisches Material, wobei bevorzugterweise die Brechungsindizes des Gittersubstrats und des Deckmaterials identisch sind. Dadurch ist eine optisch wirksame Struktur ausgebildet, die aus zwei Gittern aus dem hochbrechenden Material besteht, welche durch die Höhe des ursprünglichen Rechteckprofils beabstandet sind. Die das Liniengitter bildenden Gitterstege sind beispielsweise aus ZnS. Man kann damit zwar einen Farbkontrast in Reflexion erzeugen, in Transmission ist eine Veränderung des Farbtons für unterschiedliche Winkel jedoch kaum wahrnehinbar. Diese Struktur bietet sich deshalb lediglich als Sicherheitsmerkmal in Reflexion an und muss dazu auf einem absorbierenden Untergrund aufgebaut weiden.

Zweidimensional periodische Lochstrukturen sind in der wissenschaftlichen Literatur beschrieben, welche im Subwellenlängenbereich Filtereigenschaften des einfallenden Lichtes aufweisen. Hierzu sei auf folgende Literaturstellen verwiesen: T.W: Ebbesen et al., "Extraordinary optical transmission through sub-wavelength hole arrays", Nature, 667-669 (1998); L. Martin-Moreno et al, "Theory of extraordinary optical transmission through subwavelength hole arrays", Phys. Rev. Lett. 86(6), 1114-1117 (2001); W.L. Barnes et al., "Surface plasmon subwavelength optics", Nature, Vol 424, Issue 6950, pp. 824-830 (2003); J. Bravo-Abad et al., "How light emerges from an illuminated array of subwavelength holes", Nature Physics 1, 120-123 (2006); H. S. Lee et al, "Color filter based on a subwavelength patterned metal grating", Opt. Express 15,15457-15463 (2007); C.-P. Huang et al, "Dual effect of surface plasmons in light transmission through perforated metal films", Phys. Rev. B 75, 245421 (2007). Diese sogenannten Hole- Arrays bestehen aus dünnen opaken Metallfilmen.

In der DE 102007016394 A1wird die Verwendung solcher Strukturen als Sicherheitselement in Wertdokumenten zur Echtheitsauthentifizierung vorgeschlagen.

Weiter sind zweidimensional periodische Gitter bekannt, welche eine Farbfilterung in Grundfarben Rot, Grün, Blau bei hoher Farbsättigung über einen relativ großen Blickwinkelbereich erlauben. Die Veröffentlichung B.-H. Cheong et al., "High angular tolerant color filter using subwavelength grat-ing", Appl. Phys. Lett. 94, 213104 (2009) beschreibt ein Gitter mit würfelförmigen Erhebungen, das eine ausgeprägte Bandpasscharakteristik aufweist. Die Erhebungen sind aus amorphem Silizium und befinden sich auf einem Glassubstrat. Ein Replikationsverfahren für solche Gitter ist in den Veröffentlichungen E.-H. Cho et al., "Two-dimensional photonic crystal color filter development", Opt. Express 17, 8621-8629 (2009) und E.-H. Cho et al, "Nanoimprinted photonic crystal color filters for solar-powered reflective displays", Opt. Express 18, 27712-27722 (2010) dargestellt.

Weiter zum Stand der Technik zählen die WO 2003/070482 A1, die WO 2011/032665 A1, WO 2011/082761 A1, WO 2011/066992 A1, EP 2228671 A1. Die Veröffentlichungen R. J. Potton, "Reciprocity in optics", Rep. Prog. Phys. 67, 717 (2004); R. Petit, "Electromagnetic Theory of gratings", Band 22 von Topics in current physics, Springer- Verlag (1980) erläutern das Prinzip der Reziprozität in der Optik, insbesondere bei Gittern.

Die Gitterstrukturen aus dem Stand der Technik können für Sicherheitselemente zum Schutz von Wertdokumenten verwendet werden, da sie einen Farbeffekt in Draufsicht bereitstellen, der mit üblichen Kopierverfahren nicht reproduzierbar ist. Hierfür ist die Winkelabhängigkeit des Farbeffektes besonders vorteilhaft.

Die WO 2011/082761 A1 offenbart ein Sicher heits element nach dem Oberbegriff des Anspruchs 1.

Der Erfindung liegt die Aufgabe zugrunde ein Sicherheitselement der eingangs genannten Art so weiterzubilden, dass die Fälschungssicherheit weiter gesteigert ist.

Diese Aufgabe wird in einer ersten Variante gelöst durch ein Sicherheitselement nach Anspruch 1.

Die Aufgabe wird in einer zweiten Variante gelöst durch ein Sicherheitselement nach Anspruch 17 für einen Wertgegenstand, das aufweist einen flachen, transparenten Körper mit einer Vorder- und einer Rückseite, einen am Körper ausgebildeten, ersten Bereich und einen am Körper ausgebildeten, zweiten Bereich, die ein Motiv codieren, wobei der Körper eine Gittergrundstruktur aufweist, die von der Vorderseite mit einer ersten Schicht und von der Rückseite mit einer zweiten Schicht aufgefüllt ist, und die in Draufsicht von Vorder- und Rückseite unterschiedliche Farbeindrücke vermittelt,
- wobei die Gittergrundstruktur im ersten und im zweiten Bereich gleich ist, und im ersten Bereich die erste. Schicht eine erste Brechzahl und die zweite Schicht eine zweite Brechzahl hat,
- und im zweiten Bereich die erste Schicht die zweite Brechzahl und die zweite Schicht die erste Brechzahl hat, wodurch erster und zweiter Bereich in Draufsicht von beiden Seiten das Motiv zeigen, in Durchsicht das Motiv aber nicht erkennbar ist.

Die Erfindung stellt in beiden Varianten ein Sicherheitselement bereit, welches in Reflexion von Vorder- wie Rückseite ein farbiges Motiv zeigt. Dieses Motiv verschwindet hingegen in Transmission selbst für unterschiedliche Betrachtungswinkel völlig. Das Sicherheitselement lässt eine feine Ausgestaltung von Motiven zu und ist durch Standardprägeverfahren herstellbar. Soweit nachfolgend nicht ausdrücklich auf eine der beiden Varianten Bezug genommen wird, gelten die nachfolgenden Ausführungen für beide Varianten gleichermaßen.

Die Erfindung nutzt überraschend das allgemein gültige Gesetz der Reziprozität des Lichtweges aus. Für die Transmission eines Lichtpfades durch ein Medium ist es demgemäß irrelevant, in welcher Richtung unterschiedliche Schichten durchlaufen werden. Dadurch, dass die Grundelementstruktur im ersten und zweiten Bereich hinsichtlich der vorhandenen Schichten oder Strukturen gleich ist, hat das Sicherheitselement im Transmissionsbetrieb kein Motiv. Da bei der ersten Variante im ersten und zweiten Bereich die Grundstrukturen jedoch bezogen auf die Mittelebene gegeneinander invertiert sind und bei der zweiten Variante die Schichtreihenfolge invertiert ist, ergeben sich in Draufsicht von Vorder- oder Rückseite unterschiedliche Farbeindrücke für die beiden Bereiche, was das Motiv codiert.

Die Grundelementstruktur kann auf verschiedene Art und Weise ausgeführt werden. So ist in der ersten Variante die Grundelementstruktur durch ein Substrat realisiert, das auf seinen Deckflächen unterschiedliche Interferenzschichten aufweist. Alternativ ist die Grundelementstruktur in der ersten Variante durch eine Gittergrundstruktur realisiert. Soweit in der nachfolgenden Beschreibung der ersten Variante von einer Gittergrundstruktur die Rede ist, ist dies nur exemplarisch zu verstehen:

Hinsichtlich der Gittergrundstruktur ist der Effekt des Sicherheitselementes nicht nur auf periodische Strukturen beschränkt. Auch quasi statistische Strukturen können verwendet werden, solang solche Strukturen, die ebenfalls für beide Varianten eine Gittergrundstruktur im Sinne dieser Erfindung darstellen, von Vorder- und Rückseite unterschiedliche Farbeindrücke vermitteln.

In der ersten Variante vertauscht die Spiegelung der Grundelementstruktur an der Mittelebene Vorder- und Rückseite für den zweiten Bereich. So unterscheiden sich erster und zweiter Bereich in Draufsicht von Vorder- wie auch von Rückseite. Da in Transmission im ersten wie im zweiten Bereich dieselben Schichten durchlaufen werden und aufgrund des physikalischen Prinzips der Reziprozität die Reihenfolge dieses Durchlaufs für die Transmission irrelevant ist, unterscheiden sich erster und zweiter Bereich im Durchlicht nicht.

Die Erfindung stellt in beiden Varianten ausgehend von ah und für sich bekannten Grundelementstrukturen, z. B. Gitterstrukturen, ein Sicherheitselement bereit, das in Draufsicht ein Motiv zeigt, welches in Durchlichtbetrachtung verschwindet. Ein solcher Effekt ist mit herkömmlichen Kopierverfahren nicht nachstellbar, wodurch das Sicherheitselement eine höhe Fälschungssicherheit erreicht.

Gittergrundstrukturen, die in Draufsicht von Vorder- und Rückseite unterschiedliche Farbeindrücke vermitteln, können besonders einfach dadurch erzeugt werden, dass die Gittergrundstruktur bezogen auf die Gitterebene asymmetrisch ist.

In der ersten Variante entspricht das Spiegeln der Gittergrundstruktur an der Mittelebene dann dem Erzeugen der inversen Gitterstruktur. Man kann in dieser Ausführungsform der ersten Variante den ersten und den zweiten Bereich also dadurch charakterisieren, dass im ersten Bereich eine Gitterstruktur verwendet wird und im zweiten Bereich die dazu inverse oder negative Form für das Gitter eingesetzt wird.

Der Spiegelungsvorgang für den zweiten Bereich führt natürlich an der Grenze zwischen dem ersten und zweiten Bereich zu einer Unstetigkeit. Es kann deshalb optional eine Übergangszone zwischen erstem und zweitem Bereich vorgesehen werden, die kleiner ist als eine Gitterperiode, und in der die Gittergrundstruktur des ersten Bereichs in die gespiegelte Form des zweiten Bereichs übergeht.

Besonders gute Farbeffekte in Draufsicht ergeben sich mit Gitterstrukturen, die nicht wesentlich größer sind als die Wellenlänge. Es ist deshalb bevorzugt, dass die Gittergrundstruktur eine Gitterperiode von 100 nm bis 1000 nm aufweist. Besonders gute Farbeffekte zeigen Sub- Wellenlängengitter, weshalb eine Gitterperiode zwischen 200 nm und 500 nm bevorzugt ist. Gitter stellen im Sinne der Erfindung Sub- Wellenlängengitter dar, wenn die einzelnen Gitterelemente kleiner sind als die Wellenlänge im Bereich des Lichtes.

Das Sicherheitselement lässt das Motiv umso klarer erkennen, umso unterschiedlicher der Farbeffekt in Draufsicht von der Vorder- und der Rückseite ist, da bei der ersten Variante im zweiten Bereich gegenüber dem ersten Bereich Vorder- und Rückseite der Grundelementstruktur vertauscht sind, um das Motiv zu erzeugen. Einen besonders guten Unterschied zwischen Vorderseitenansicht und Rückseitenansicht erhält man dann bei einer Gittergrundstruktur, die mit einer dünnen Metallschicht, einer Halbmetallschicht oder einer hochbrechenden Schicht mit einer teilweise absorbierenden Wirkung überzogen ist.

Beispiele für eine asymmetrische Gittergrundstruktur sind Gitterelemente, die im Profil trapezförmig oder dreieckig sind.

Die ersten und zweiten Bereiche können ihrerseits weiter strukturiert sein. Dies kann man besonders einfach dadurch erreichen, dass die Gittergrundstruktur zweidimensional periodisch ist. Eine solche Struktur ist darüber hinaus besonders fälschungssicher, weil mit üblichen Werkzeugen, die Fälschern zur Verfügung stehen, schwer herstellbar.

Dies gilt auch für Gittergrundstrukturen, die quaderförmige Erhebungen und Vertiefungen aufweisen:

Bevorzugt weist die Gittergrundstruktur in einer 2D-periodischen Ausführungsform eine zusammenhängende hochbrechende (insbesondere metallische) Grundschicht, die eine Gitterebene definiert, und über der Grundschicht ein zweidimensional regelmäßiges Muster aus einzelnen hochbrechenden (insbesondere metallischen) Flächenelementen auf, die sich jeweils parallel zur Gitterebene erstrecken und jeweils von der Grundschicht durch ein Zwischen-Dielektrikum oder eine Zwischenschicht um einen Abstand beabstandet sind, der größer ist als die Dicke der Grundschicht und der Flächenelemente. Optional hat das regelmäßige Muster in mindestens zwei Richtungen, die parallel zur Gitterebene verlaufen, eine Periodizität zwischen 100 nm und 800 nm, bevorzugt zwischen 200 nm und 500 nm.

Die Gitterstruktur sieht in der 2D-periodischen Ausführungsform weiter bevorzugt eine hochbrechende Grundschicht sowie hochbrechenden Flächenelemente, die über der Grundschicht angeordnet sind, vor. Die hochbrechende Eigenschaft der Grundschicht bzw. der Flächenelemente wird durch eine geeignete Materialwahl erreicht. Neben Metall als Material kommen dabei insbesondere Silizium bzw. Siliziummonoxid in Frage. In dieser Beschreibung wird der Begriff "metallisch" als gleichbedeutend mit "hochbrechend" aufgefasst, soweit nicht ausdrücklich anderes beschrieben ist.

Wesentlich für die Wirkung dieser Ausführungsform ist es, dass über einer zusammenhängenden metallischen Schicht nicht zusammenhängende, in einem Muster angeordnete Flächenelemente angeordnet sind. Wenn ein zweidimensional periodisches Gitter mit einem Profil, das senkrechte Flanken besitzt, senkrecht metallisch bedampft wird, entsteht ein nicht geschlossener Metallfilm auf Plateaus an der Gitteroberseite. Es bildet sich auf der unteren Gitterfläche (Grundschicht) ein zusammenhängender Metallfilm aus. Die Erhebungen des Profils sind dabei nur auf den Plateaus metallisch überzogen.

Die unbedampfte Gitterstruktur besteht optional aus einem dielektrischen Material, welches z. B. eine Brechzahl von etwa 1,5 aufweist. Dabei eignen sich besonders Kunststofffolien, z. B. PET-Folien, als Substrat. Die eigentliche Basisstruktur ist z. B. ebenfalls in Kunststoff, bevorzugt UV-Lack, ausgebildet. Nach der Bedampfung wird schließlich die Struktur mit UV-Lack aufgefüllt und mit einer Deckfolie kaschiert. Somit liegt ein Schichtaufbau vor, bei dem die Ober- und die Unterseite im Wesentlichen dieselbe Brechzahl besitzt.

Ferner ist die Beschichtung nicht nur auf einfache metallische Schichten beschränkt. Es sind auch Mehrfachschichten, insbesondere Trilayer denkbar. Es ist bekannt, dass mehrfach beschichtete eindimensional periodische Gitter eine starke Farbfilterfilterung durch die Ausbildung von Fabry-Perot Resonatoren sowohl in Reflexion als auch in Transmission ermöglichen. Bei Trilayer sind folgende Schichten besonders bevorzugt: zwei halbtransparente Metallschichten mit einer dazwischen liegenden dielektrischen Abstandsschicht bzw. zwei hochbrechende Schichten mit einer dazwischen liegenden niedrigbrechenden Schicht. Für die Metallschichten kommen folgende Materialien in Frage: AI, Ag, Pt, Pd, Au, Cu, Cr und Legierungen davon. Als hochbrechende Schichten eignen sich beispielsweise ZnS, ZnO, TiO₂, ZnSe, SiO, Ta₂O₅ oder Silizium. Als niedrigbrechende Schichten bieten sich SiO₂, Al₂O₃ bzw. MgF₂ an.

Bei einem besonders zweckmäßigen Herstellverfahren wird zuerst ein Dielektrikum als Basisstruktur geeignet strukturiert und dann beschichtet. Dann hat die Grundschicht im Bereich unter jedem Flächenelement eine Öffnung. Dies ist zugleich vorteilhaft, da dann auch in Transmission ein optischer Effekt entsteht.

Es ist bevorzugt, dass das Gitter in ein Einbett-Dielektrikum eingebettet ist, welches dieselbe Brechzahl hat wie das Dielektrikum, welches die Basisstruktur bildet und die Grundschicht von den Flächenelementen beabstandet. Die Brechzahl kann beispielsweise zwischen 1,4 und 1,6 liegen.

Es zeigte sich, dass die Farbeffekte der Gittergrundstruktur durch die Periodizität des Musters beeinflusst werden können. Dies kann dazu ausgenutzt werden, farbige Symbole bzw. Bilder zu erzeugen. Dazu kann der Flächenfüllfaktor und/ oder der Abstand zwischen Flächenelementen und Grundschicht lokal variiert werden. Insbesondere ist es möglich, eine Gruppe mehrerer Flächenelemente mit identischen Abmessungen so zu gestalten, dass ein gewünschter Farbeffekt eintritt. Diese Gruppe bildet dann ein Subpixel. Mehrere Subpixel werden mit unterschiedlichen Farbeigenschaften durch entsprechende geometrische Gestaltung ausgestaltet und dann zu einem Pixel zusammengefasst. Dies erlaubt eine farbige Bilddarstellung. Die unterschiedlichen Farben können dabei durch die entsprechende lokale Variation eines oder mehrerer der Parameter des Gitters (Abstand der Flächenelemente in zwei Raumrichtungen sowie Abstand der Flächenelemente von der Grundschicht) variiert werden.

Durch die pixelweise Farbmischung von Basisfarben, z. B. RGB Farben, in Subpixelbereichen können Echtfarbenbilder hergestellt werden. Der Vorteil von solchen Strukturen gegenüber der herkömmlichen Drucktechnik ist, dass hierbei eine sehr feine Strukturierung bis in den Mikrometerbereich vorgenommen werden kann.

Eine für die erste Variante geeignete, kein Gitter verwendende Grundelementstruktur ist ein Substrat, auf dessen Deckflächen unterschiedliche Interferenzschichten angeordnet sind. Ein solches Substrat kann durch geeignete Strukturierung von Vorder- und Rückseite einfach zum Sicherheitselement ausgebildet werden. Wesentlich ist lediglich, dass das Reflexionsverhalten an der ersten und der zweiten Deckseite für den Interferenzaufbau unterschiedlich ist. Dies erreicht man dadurch, dass die Grundelementstruktur bezogen auf die Mittelebene asymmetrisch ist, entweder weil die Schichten an den Deckflächen sich in ihrer Dicke oder in ihrer Materialzusammensetzung oder beidem unterscheiden. Der Schichtaufbau ist folglich im ersten Bereich gespiegelt zum zweiten Bereich.

Die bereichsweise unterschiedliche Strukturierung kann mit herkömmlichen Verfahren, beispielsweise einem Waschverfahren oder durch Laserdemetallisierung, erzielt werden.

Für die Schichten kommt eine Vielzahl von Interferenzschichten in Frage, die sich hinsichtlich ihrer Reflexionseigenschaften auf einem Substrat unterscheiden. So sind Color-Shift-Schichtsysteme geeignet. Auch kann man opake Schichtmaterialien verwenden, die, um die erforderliche Transmission zu erhalten, teilweise perforiert vorliegen.

Die Verwendung von perforierten Schichten hat den Vorteil, dass die Schichten an Vorder- und Rückseite des Substrates zuerst unstrukturiert aufgebracht werden können und dann lediglich hinsichtlich ihrer Perforation unterschiedlich bearbeitet werden, um ersten und zweiten Bereich auszubilden. Die Perforierung kann beispielsweise mit Hilfe eines gepulsten Laserstrahls etc. durchgeführt werden.

Um in Transmission einen Farbeffekt zu erreichen, kann man das Substrat einfärben.

Der bereits erwähnte Effekt der Reziprozität des Lichtweges gilt auch für den Fall, dass unterschiedliche Brechzahlen an den Grenzflächen der Gittergrundstruktur und dem darüberliegenden bzw. darunterliegenden Halbraum vorliegen. Die zweite Variante der Erfindung macht sich dies zunutze und kann dadurch eine Gittergrundstruktur verwenden, die im ersten und zweiten Bereich im Wesentlichen gleich ist. Der unterschiedliche Farbeffekt entsteht dann lediglich dadurch, dass die Schichtreihenfolge, die im ersten Bereich vorgesehen ist, also die Reihenfolge von Schichten über der Gittergrundstruktur und unter der Gittergrundstruktur, im zweiten Bereich invertiert ist. Das Schichtmateriäl, das sich im ersten Bereich über der Gittergrundstruktur befindet, ist im zweiten Bereich unter der Gittergrundstruktur angeordnet, und umgekehrt.

Das Sicherheitselement kann für ein Wertdokument verwendet werden. Es kann insbesondere in einem Sicherheitsfaden, Aufreißfaden, Sicherheitsband, Sicherheitsstreifen, Patch oder Etikett integriert sein. Insbesondere kann das Sicherheitselement transparente Bereiche oder Ausnehmungen des Wertdokumentes überspannen.

Das Sicherheitselement kann insbesondere Teil einer noch nicht Umlauf fähigen Vorstufe zu einem Wertdokument sein, das zusätzlich noch weitere Echtheitsmerkmale aufweisen kann. Unter Wertdokumenten werden einerseits Dokumente verstanden, welche mit dem Sicherheitselement versehen sind. Andererseits können Wertdokumente auch sonstige Dokumente oder Gegenstände sein, die mit dem Sicherheitselement versehen werden, damit die Wertdokumente nicht kopierbare Echtheitsmerkmale aufweisen, um eine Echtheitsüberprüfung zu ermöglichen und unerwünschte Kopien zu verhindern. Chip- oder Sicherheitskarten, wie z. B. Bank- oder Kreditkarten oder Ausweise, sind weitere Beispiele für ein Wertdokument.

Es versteht sich, dass die vorstehend genannten und die nachstehend noch zu erläuternden Merkmale nicht nur in den angegebenen Kombinationen, sondern auch in anderen Kombinationen oder in Alleinstellung einsetzbar sind, solange der Gegenstand unter den Ansprüchen fällt.

Nachfolgend wird die Erfindung beispielshalber anhand der beigefügten Zeichnungen, die auch erfindungswesentliche Merkmale offenbaren, noch näher erläutert. Es zeigen:
- Fig. 1a-d: unterschiedliche Ansichten eines Sicherheitselementes von der Vorderseite (Fig. 1a), der Rückseite (Fig. 1b), in Durchsicht (Fig. 1c) sowie als Schnittdarstellung (Fig. 1d),
- Fig. 2: eine Schnittdarstellung durch eine Bauweise des Sicherheitselementes 20 der Fig. 1, das gemäß einer ersten Variante der Erfindung aus einer Gittergrundstruktur besteht und zwei Bereiche aufweist,
- Fig. 3-5: Schnittdarstellungen ähnlich der Fig. 2 für weitere Ausführungsformen der Gittergrundstruktur gemäß der ersten Variante,
- Fig. 6: eine perspektivische Schemadarstellung des Sicherheitselementes mit einer weiteren Ausführungsform der Gittergrundstruktur gemäß der ersten Variante,
- Fig. 7: eine Schnittdarstellung durch das Sicherheitselement der Fig. 6,
- Fig. 8 eine: perspektivische Schemadarstellung einer weiteren Ausführungsform der Gittergrundstruktur der Fig. 6,
- Fig. 9: eine Weiterbildung der Gittergrundstruktur der Fig. 8,
- Fig. 10: eine Abwandlung der Gittergrundstruktur der Fig. 9,
- Fig. 11-12: Schemadarstellungen zur Verdeutlichung der Funktionsweise der Gittergrundstruktur gemäß der ersten Variante,
- Fig. 13-17: Diagramme hinsichtlich der Filtereigenschaften verschiedener Gittergrundstrukturen,
- Fig. 18: eine Schemadarstellung zur Bilderzeugung innerhalb eines der Bereiche,
- Fig. 19: eine Schnittdarstellung durch eine Bauweise des Sicherheitselementes 20 der Fig. 1, das aus einer Grundelementstruktur mit Interferenzschichtaufbau besteht,
- Fig. 20-22: Abwandlungen der Bauweise der Fig. 19, und
- Fig. 23: eine Abwandlung der Bauweise der Fig. 4 zur Realisierung einer zweiten Variante der Erfindung.

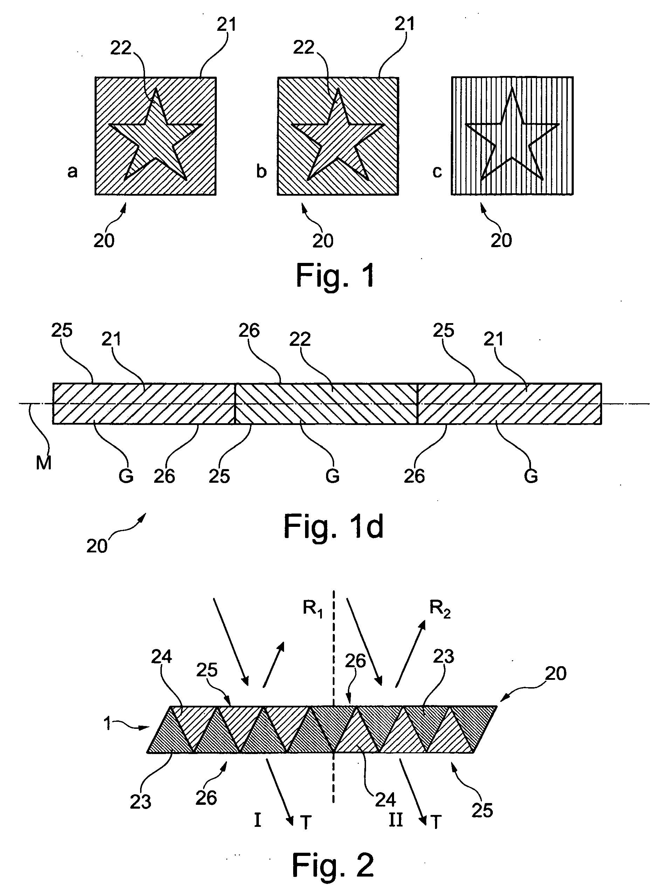

Fig. 1 zeigt verschiedene Ansichten eines Sicherheitselementes 20, das zur Authentifizierung oder zum Kopierschutz eines Wertgegenstandes, beispielsweise eine Wertdokumentes, wie einer Banknote etc., dient. Das Sicherheitselement 20 stellt in Draufsicht von der Vorder- und Rückseite unterschiedliche Ansichten ein und desselben Motivs zur Verfügung, und bei Durchsicht verschwindet das Motiv.

Fig. 1 enthält vier Teilfiguren, die die unterschiedlichen Ansichten zeigen. Fig. 1a zeigt die Ansicht des Sicherheitselementes 20 von der Vorderseite. Zu sehen ist, dass sich ein Motiv in Form eines Sterns vor einem Hintergrund 21 abhebt. Der Vordergrund 22 bildet das Motiv, im Beispiel den Stern. Durch die unterschiedliche Schraffur ist verdeutlicht, dass sich Vordergrund 22 und Hintergrund 21 in der Draufsicht in Farbe und/ oder Farbspiel bei Kippungen und/oder Reflexionsintensität unterscheiden. Von der Vorderseite betrachtet, erscheint der Vordergrund 22, also der Stern, in Reflexion z.B. in einer anderen Farbe und Intensität als der Hintergrund 21. Wenn man das Sicherheitselement 20 von der Rückseite aus betrachtet, erhält man, wie Fig. 1b zeigt, eine Invertierung des Färb- und Intensitätseindruckes für den Vordergrund 22 und den Hintergrund 21. Farbe und Intensität, die an der Vorderseite der Vordergrund 22 hatte, erscheinen bei der Betrachtung an der Rückseite für den Hintergrund 21. Analoges gilt für den Hintergrund 21 an der Vorderseite und den Vordergrund 22 an der Rückseite.

In Durchsicht (Fig. 1c) verschwindet dagegen das Motiv auch für unterschiedliche Betrachtungswinkel komplett, denn die Farben des Sterns und des Hintergrunds sind identisch. In Fig. 1c ist lediglich zur Verdeutlichung dieses Effekts der Umriss des Sterns eingezeichnet. Er erscheint jedoch nicht, da Farbe und Intensität für Vordergrund 22 und Hintergrund 21. im Durchlicht identisch sind.

Diese Wirkung des Sicherheitselementes 20 ist keinesfalls auf zweifarbige Motive in Reflexion beschränkt. Es ist auch möglich, ein mehrfarbiges, beispielsweise vierfarbiges Motiv in Reflexion zu gestalten. Dieses erschiene in Transmission dann zweifarbig. Allgemein gilt, dass ein n-farbiges Motiv in Reflexion durch eine entsprechende Gestaltung des Sicherheitselementes 20, die nachfolgend noch erläutert werden wird, in Transmission als Struktur mit lediglich n/2 Farben erscheint.

Der Aufsichts-/Durchsichtseffekt kann besonders bevorzugt bei Durchsichtfenstern von Banknoten oder anderen Wertdokumenten Verwendung finden. Die Farbeigenschaften können kaum durch einfache Mittel nachgeahmt werden, jedoch ohne Hilfsmittel mit dem unbewaffneten Auge wahrgenommen werden.

Ferner ist es möglich, die Transmissionseigenschaften, insbesondere das Verschwinden des Motivs, maschinell, beispielsweise mit Banknotenbearbeitungs- oder -zählmaschinen zu überprüfen. Diese Überprüfung kann mit Hilfe eines Transmissionssensors erfolgen, der mit einer Mehrfarbenlichtquelle, beispielsweise einer Weißlichtquelle, ausgestattet ist, und die Transmission ortsaufgelöst für unterschiedliche Wellenlängen oder unterschiedliche Wellenlängenbereiche erfasst. Es ist auch eine vereinfachte Variante denkbar, bei der die Transmission entweder für eine Wellenlänge oder als integraler Wert für Weißlicht gemessen wird. Auf diese Weise kann einfach überprüft werden, ob in Transmission kein Motiv erkennbar ist, was bei herkömmlichen Druckverfahren, die zur Nachahmung des Farbeffektes in Aufsicht eingesetzt werden könnten, nicht der Fall wäre. Natürlich kann das Sicherheitselement 20 auch mit anderen Strukturen, wie Hologrammen etc., kombiniert werden.

Fig. 1d zeigt eine schematische Schnittdarstellung durch das Sicherheitselement 20 der Fig. 1a bis c. Zu sehen ist, dass das Sicherheitselement 20 durchgehend aus einer Grundelementstruktur G besteht, wobei im Bereich des Motivs 21 die Grundelementstruktur bezogen auf eine Mittelebene M, die zwischen den Deckflächen des Sicherheitselementes 20 liegt, invertiert ist. Diese Invertierung kann eine vollständige Spiegelung um die Mittelebene M sein. Es ist aber auch möglich, dass die Invertierung lediglich bestimmte Parameter der Grundelementstruktur G betrifft, beispielsweise eine Abfolge von Brechzahlen. Nachfolgend wird in einer ersten Variante eine vollständige Invertierung oder Spiegelung erläutert. Eine zweite Variante betrifft die Invertierung von Brechzahlen.

Die Invertierung ist durch die unterschiedliche Schraffur im Bereich des Vordergrundes 22 verdeutlicht. Sie hat im Falle einer Spiegelung zur Folge, dass im Bereich des Hintergrunds 21 eine erste Deckseite 25 der Grundelementstruktur G in der Darstellung der Fig. 1d oben liegt, eine zweite Deckseite 26 unten. Im Bereich des Vordergrundes 22 sind die Verhältnisse genau invertiert, d. h. die zweite Deckseite 26 liegt oben, die erste Deckseite 25 unten. In beiden Varianten sind in jeder Draufsicht die Reflexionseigenschaften, die die Grundstruktur G hat, im Bereich des Vordergrundes 22 gegenüber dem Hintergrund 21 invertiert. Die Transmissionseigenschaften bleiben aufgrund des Gesetzes der Reziprozität gleich.

Das Sicherheitselement 20 erzeugt einen Farbeffekt durch die bereichsweise invertierte Grundelementstruktur G, die in Draufsicht von der Vorder- und der Rückseite unterschiedliche Farbeffekte zeigt. Solche Grundelementstrukturen G sind dem Fachmann in vielfacher Hinsicht bekannt. Nachfolgend werden verschiedene Varianten hierfür erläutert.

Bezogen auf die Mittelebene M zwischen Vorder- und Rückseite, die in Fig. 1 in etwa der Zeichenebene entspricht, ist in der ersten Variante die Grundelementstruktur G zwischen Vordergrund 22 und Hintergrund 21 invertiert. Mit anderen Worten, die Struktur im Hintergrund 21 und Vordergrund 22 ist strukturell identisch, nicht jedoch bezüglich der Orientierung. Im Vordergrund 22 ist die Grundelementstruktur an der Mittelebene M gespiegelt. Die Grundelementstruktur G hat an ihren beiden Deckflächen 25, 26 unterschiedliche Reflexionseigenschaften. Die unterschiedlichen Effekte in den Ansichten der Fig. 1a und 1b lassen sich somit unter Verwendung dieser Begriffe wie folgt beschreiben, wobei die Beschreibung exemplarisch am Beispiel der Spiegelung (erste Variante) erfolgt. Sie gilt gleichermaßen auch ganz allgemein für das Prinzip der Invertierung von Eigenschaften, welche für das Reflexionsverhalten wesentlich sind:

In Fig. 1a sieht man für den Hintergrund 21 die erste Deckseite 25 der Grundelementstruktur G. Im Bereich des Vordergrundes 22, also des Sterns, sieht man hingegen die zweite Deckseite 26 der bis auf die Orientierung gleichen Grundelementstruktur G. Die Verhältnisse sind in der Ansicht von der Rückseite (Fig. 1b) invertiert. Man sieht also für den Hintergrund 21 die zweite Deckseite 26 und für den Vordergrund 22 die erste Deckseite 25. Die Grundelementstruktur G ist bis auf diesen Orientierungswechsel im gesamten Sicherheitselement 20 dieselbe. Sie ist lediglich im Vordergrund 22 gegenüber dem Hintergrund 21 an der Mittelebene M gespiegelt, so dass das Motiv durch Bereiche I und II gebildet ist, in denen in der Draufsicht von der Vorderseite die erste Deckseite 25 für den Hintergrund 21 und die zweite Deckseite 26 für den Vordergrund 22 sichtbar sind. Aufgrund der unterschiedlichen Reflexionseigenschaften der Grundelementstruktur G an der ersten und der zweiten Deckseite 25, 26 erhält man eine klare Erkennbarkeit des Motivs:

Fig. 2 zeigt für eine erste Ausführungsform der Grundelementstruktur G eine schematische Schnittdarstellung durch das Sicherheitselement 20 der Fig. 1. Dabei sind durch eine gestrichelte Linie getrennt der erste Bereich I - entsprechend beispielsweise dem Hintergrund 21 - und der zweite Bereich II - entsprechend beispielsweise dem Vordergrund 22 - nebeneinander dargestellt. Die Grundelementstruktur G ist hier als Gittergrundstruktur 1 realisiert. In beiden Bereichen I und II ist die Gittergrundstruktur 1 bis auf einen Übergangsbereich, der bereits im oberen, allgemeinen Teil der Beschreibung erwähnt ist und nachfolgend noch weiter erläutert werden wird, identisch.

Die Gittergrundstruktur 1 besteht in dieser Ausführungsform aus regelmäßigen Gitterstegen 23 und Gitterspalten 24. Im Ausführungsbeispiel gemäß Fig. 2 sind die Gitterstege 23 dreieckig und die Gitterspalte 24 ebenfalls. Der einfacheren Herstellbarkeit halber sind die Gitterspalten 24 mit einem Material gefüllt, dessen Brechungsindex sich von dem der Gitterstege 23 unterscheidet. Diese Füllung ist aber nicht zwingend nötig. Die Gittergrundstruktur 1 ist im Bereich I so angeordnet, dass die erste Deckseite 25 in der Darstellung der Fig. 2 oben liegt, und die zweite Deckseite 26 unten. Im Bereich II ist die Gittergrundstruktur 1 invertiert dazu ausgerichtet, d.h. an der Mittelebene M, welche hier die Gitterebene ist, gespiegelt. Dadurch liegt im Bereich II die erste Deckseite 25 in der Darstellung der Fig. 2 unten, die zweite Deckseite 26 oben.

Die Gittergrundstruktur 1 reflektiert an der ersten Deckseite 25 einfallende Strahlung als reflektierte Strahlung R1, und an der zweiten Deckseite 26 einfallende Strahlung als reflektierte Strahlung R2. Da sich die Reflexionseigenschafften in der Gittergrundstruktur 1 an der ersten und der zweiten Deckseite unterscheiden, unterscheiden sich folglich auch die reflektierten Strahlungen R1 und R2 in den Bereichen I und II. Das Motiv, bestehend aus Vordergrund 22 und Hintergrund 21, wird dadurch sichtbar.

Im Durchlichtbetrieb unterscheidet sich hingegen die transmittierte Strahlung T in den Bereichen I und II nicht, da in beiden Bereichen dieselben Strukturen durchlaufen werden und die Reihenfolge des Durchlaufs aufgrund des Gesetzes der Reziprozität des Lichtweges unbeachtlich ist.

Eine wesentliche Eigenschaft der Grundelementstruktur G ist es, dass sie bezüglich ihrer Reflexionseigenschaften bezogen auf die erste und zweite Deckseite nicht symmetrisch ist. Im Falle eines Gitters ist dies dadurch erreicht, dass die Gittergrundstruktur 1 bezüglich der Gittermittelebene ebenfalls asymmetrisch ist. Dies ist in Fig. 1 der Fall.

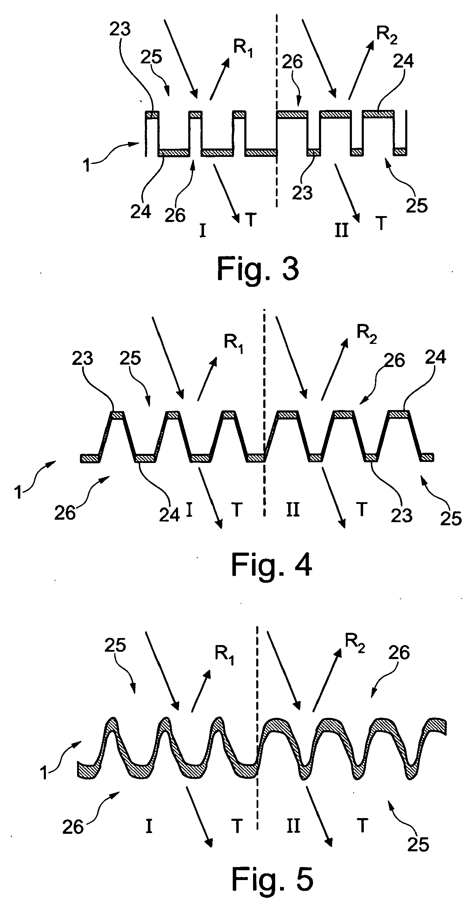

Unter dem Gesichtspunkt der Herstellbarkeit ist es bevorzugt, für das Sicherheitselement 20 eine asymmetrische Gittergrundstruktur 1 zu verwenden, da diese mit einem Prägeverfahren einfach repliziert werden kann. Daher eignen sich bevorzugt Reliefgitter mit Gitterstegen 23 und Gitterspalten 24, die bezogen auf die Gittermittelebene asymmetrisch sind und deren Oberfläche bedampft ist, beispielsweise metallisch. Fig. 3 zeigt ein solches Rechteckgitter in einer Darstellung ähnlich der Fig. 2. Im Bereich II liegt wiederum das gespiegelte Profil des Bereichs I vor. Das Gitter weist in den Bereichen I und II unterschiedliche Reflexionseigenschaften, jedoch dieselbe Transmission auf. Bezogen auf die Gittermittelebene werden asymmetrische Gitterprofile bevorzugt durch Rechteckgitter mit einem Füllfaktor ausgebildet, der deutlich von 0,5 abweicht. Bei einem Wert von exakt 0,5 wäre eine Invertierung oder Spiegelung zwischen den Bereichen I und II nicht möglich.

Einfacher herzustellen in einem Prägeverfahren ist ein trapezförmiges Profil, wie es Fig. 4 schematisch zeigt. Bei einem solchen Gitter ist es auch möglich - und in Fig. 4 ist dies auch dargestellt - dass bei einer gerichteten Bedampfung die Flanken mit einer dünnen Schicht, beispielsweise einem dünnen Metallfilm, überzogen werden. Auch dann bleibt die Transmission T für die Bereiche I und II gleich. Selbiges gilt auch für den Fall einer schrägen Bedampfung einer solchen Profilform.

Fig. 5 illustriert schließlich den allgemeinen Fall einer Gittergrundstruktur 1, die bezüglich der Gittermittelebene asymmetrisch ist, und in den Bereichen I und II eine zueinander gespiegelte Anordnung hat.

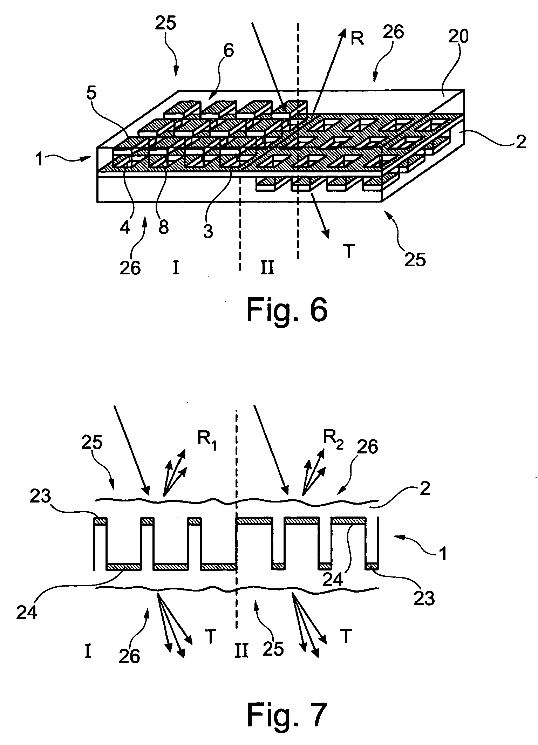

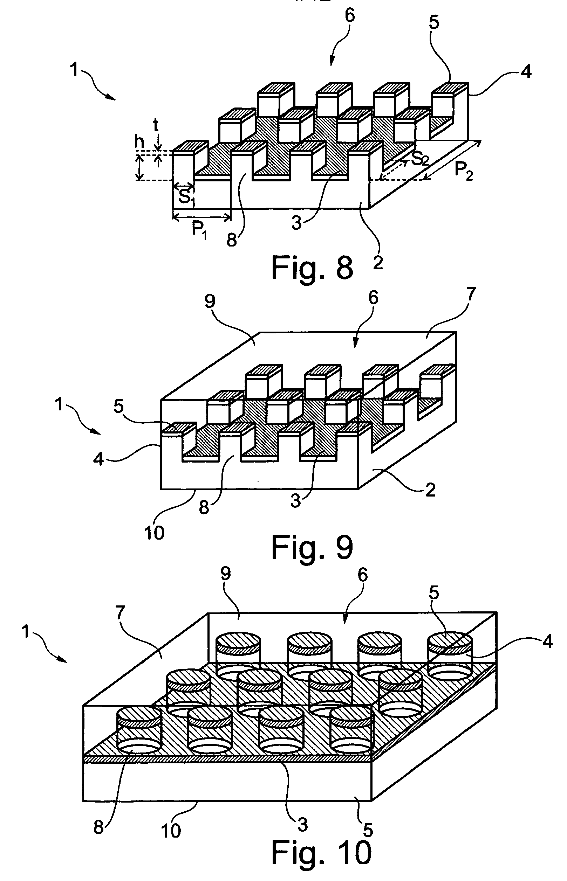

Die Gittergrundstruktur 1 kann eindimensional ausgebildet werden. Zweidimensional periodische Gitter haben jedoch den Vorteil, dass eine wesentlich stärkere Asymmetrie im Füllfaktor ausgebildet werden kann, was noch deutlichere Unterschiede zwischen der Reflexion an der ersten Deckseite 25 und der zweiten Deckseite 26 bewirkt. Ein besonders guter Kontrast im Motiv zwischen Vordergrund und Hintergrund ist die Folge. Fig. 6 zeigt schematisch ein solches zweidimensionales periodisches Gitter, dessen Grundprinzipien nachfolgend anhand der Fig. 8 bis 19 noch näher erläutert werden.

Bei der Betrachtung von der Oberseite können spiegelnde Reflexionen bei ungünstigen Verhältnissen störend auftreten. Die Farbeigenschaften der beschriebenen Gittergrundstruktur in Reflexion können durch eine zusätzlich aufgebrachte Streufolie verbessert werden, wie Fig. 4 zeigt. Dort ist die Gittergrundstruktur 1 in einen Träger 2 eingebettet, der an seinen Deckflächen reflexiönsmindernde Eigenschaften hat, beispielsweise durch eine geeignete Streufolie. Bevorzugterweise hat eine solche Streufolie eine relativ kleine Winkeldivergenz, welche beispielsweise zwischen 5° und 20° liegt. Diese Streuwirkung kann auch durch Partikel in einem UV-Lack oder einer Deckfolie oder dem Träger 2 erzielt werden. Die gleichmäßige Transmission Wird durch die Lichtstreuung so gut wie nicht beeinträchtigt, soweit das Streuverhalten des Trägers 2 oder der darauf aufgebrachten Schichten oder Folien an beiden Deckseiten in etwa gleich ist.

Im Sicherheitselement 20 ist die Gittergrundstruktur 1 in den Bereichen I und II bis auf eine Invertierung bzw. Spiegelung in einem der Bereiche gleich. Dies führt dazu, dass an der Grenze zwischen den Bereichen I und II ein Übergangsbereich bestehen muss, in dem die Gittergrundstruktur 1 in ihre gespiegelte Form übergeht. Dieser Übergang ist in den Fig. 2b bis 7 durch eine gestrichelte Linie verdeutlicht. Der Übergangsbereich, in dem die Grundstruktur 1 in ihre invertierte, d.h. gespiegelte Form übergeht, hat eine Ausdehnung im Bereich einer Periode der Gitterstruktur, was aufgrund der verwendeten Strukturgrößen mit Perioden von 1000 nm oder kleiner mit unbewaffnetem Auge nicht wahrnehmbar ist.

Anhand der Fig. 8 bis 19 wird nachfolgend die zweidimensionale periodische Gitterstruktur der Fig. 6 näher erläutert. Die Figuren beziehen sich dabei lediglich auf die Gittergrundstruktur, also die Ausbildung im Bereich I oder II.

Fig. 8 zeigt eine Gittergrundstruktur 1, die für das Sicherheitselement 20 in einem Wertdokument verwendet werden kann. Die Gittergrundstruktur 1 ist dadurch hergestellt, dass der Träger 2 mit einem Profil versehen wird, das senkrechte Flanken besitzt. Das Profil ist so ausgebildet, dass an einer Oberseite des Trägers 2 ein Muster 6 von Säulen 4 gebildet ist. Der Träger ist aus einem Dielektrikum und wurde mit einer Metallschicht beschichtet, die sich in einer Grundschicht 3 auf der Oberfläche des Trägers 2 sowie in einer Beschichtung 5 auf den Säulen 4 ablegt. Aufgrund der senkrechten Flanken sind diese nicht beschichtet.

Grundsätzlich ist die Gittergrundstruktur 1 so ausgebildet, dass sie im Durchlichtbetrieb nicht vollständig opak ist, also zu einem gewissen Grad lichtdurchlässig bleibt. Die Schichtdicke T der Metallschicht ist deshalb ebenso wie das Material entsprechend gewählt.

Im Muster 6 sind die Säulen 4, die hier lediglich exemplarisch als quaderförmig ausgebildet sind und unter anderem zylindrische (nicht notwendigerweise kreiszylindrische) Erhebungen sein können, in Form eines zweidimensional periodischen Gitters angeordnet, wobei entlang zweier senkrecht zueinander liegender Richtungen in der durch die Grundschicht 3 definierten Gitterebene der Gittergrundstruktur 1 Periodizitäten p₁ und p₂ vorhanden sind. Die Ausdehnungen der Säulen 4 bzw. der Erhebungen in der Grundebene sind mit s₁ und s₂ bezeichnet. Die Grundschicht 3 wie auch die Beschichtungen 5 haben eine Schichtdicke t. Die im Muster 6 angeordneten Beschichtungen 5 sind durch die Höhe h der Säulen 4 um den Abstand h - t von der Oberseite der Grundschicht 3 beabstandet. Die Säulenhöhe h des profilierten Trägers 2 ist dabei größer als die Schichtdicke t, so dass die Metallschicht unterbrochen ist und die Beschichtungen 5 nicht zusammenhängen. Es entsteht damit eine Metallstruktur, die aus der Grundschicht 3 besteht, welche die Gitterebene definiert, mit Löchern 8, über denen sich die Beschichtungen 5 befinden. Der Abstand zwischen den Beschichtungen 5 und der Grundschicht 3 ist dabei durch die dielektrischen Säulen 4 bewirkt.

Die Periodizitäten p₁ und p₂ liegen bevorzugt im Subwellenbereich, d. h. im Bereich zwischen 100 nm und 1000 nm, bevorzugt zwischen 200 nm und 500 nm. Die Füllfaktoren s₁/p₁ und s₂/p₂ liegen zwischen größer 0,5 und 0,8, bevorzugt unter 0,7. Um eine polarisationsunabhängige Farbfilterung zu erzielen, werden die Profilparameter für die beiden Raumrichtungen möglichst identisch gewählt, also p₁ = p₂ und s₁ = s₂. Dies ist jedoch optional. Ebenso sind im beschriebenen Ausführungsbeispiel die Periodizitätsrichtungen senkrecht zueinander. Auch dies ist optional. Auch räumlich asymmetrische Anordnungen des Profils und der Periodizität sind denkbar. Mit anderen Worten, das Muster 6 muss nicht, wie in Fig. 8 dargestellt, ein kartesisches Muster sein. Auch können die Säulen 4 asymmetrisch gestaltet sein.

Fig. 9 zeigt eine Weiterbildung, bei der die Gittergrundstruktur 1 in ein Einbett-Dielektrikum 7 eingebettet ist. Dies hat Anwendungsvorteile, da die Oberfläche der Gittergrundstruktur 1 dann glatt ist.

Fig. 10 zeigt eine Gittergrundstruktur 1, deren Säulen 4 kreiszylindrisch ausgebildet sind. Diese Form eignet sich besonders für unpolarisiertes Licht. Abwandlungen von der Quadratform der Fig. 8 bzw. der Kreisform der Fig. 10 sind ebenfalls möglich, z. B. durch beispielsweise abgerundete Ecken.

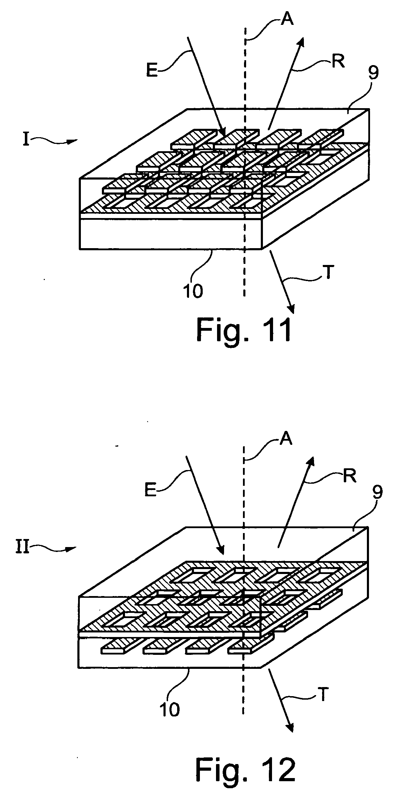

Die Fig. 11 und 12 zeigen die Wirkungsweise der Gittergrundstruktur 1. Fig. 11 zeigt dabei die Verhältnisse bei einfallender Strahlung E auf die Oberseite 9 im Bereich I. In Fig. 12 ist der Einfall im Bereich II gezeigt. Das Sicherheitselement reflektiert einfallende Strahlung E in Form reflektierender Strahlung R und transmittiert einen Teil als transmittierte Strahlung T. Der wesentliche Unterschied zwischen der Beleuchtung im Bereich I und im Bereich II liegt darin, dass im Bereich I die einfallende Strahlung E zuerst auf die im Muster 6 angeordnete, periodische Beschichtung 5 fällt. Im Bereich II wird hingegen das Muster der Löcher 8 in der Grundschicht 3 direkt beleuchtet. Dieser Unterschied hat deutliche Konsequenzen im Reflexionsverhalten, insbesondere hinsichtlich des Farbeindruckes.

Durch die Aufbringung der Metallschicht auf den strukturierten Träger 2 ist unter den Beschichtungen 5, d. h. im Bereich des Säulen 4 die Grundschicht 3 mit den Löchern 8 versehen. Die Gittergrundstruktur 1 hat also ein sogenanntes Hole-Array in der Metallschicht 3, wobei die Anordnung der Löcher 8 durch das Muster 6 definiert ist. Bei vollständig senkrechten Flanken der Säule 4 entsprechen Anordnung und Größen der Löcher 8 exakt denen der Beschichtungen 5.

Die Grundschicht 3 der Bauweise der Fig. 8 bis 10 kann durch Mehrfachschichten ergänzt bzw. ersetzt werden. Gleiches gilt für die Beschichtung auf den Säulen.

Für das Herstellungsverfahren der Gittergrundstruktur 1 und damit des Sicherheitselementes 20 kommen verschiedene Prozesse in Frage. Am einfachsten ist die Herstellung, wenn zuerst der dielektrische Träger 2 mit den im Muster 6 angeordneten Erhebungen, beispielsweise Säulen 4, und mit den Bereichen I und II ausgebildet und dann beschichtet wird. Das kann sowohl senkrecht als auch in Schrägbedampfung erfolgen. Wesentlich ist, dass die Beschichtungen 5 nicht zusammenhängen, also einzeln sind.

Für die Herstellung des Trägers 2 ist ein Abformverfahren möglich, so dass eine kostengünstige Massenproduktion realisiert werden kann.

Das hier beschriebene Sicherheitselement 20 erreicht die Farbgebung durch eine Gittergrundstruktur mit einer zweidimensionalen periodischen Subwellenlängenstruktür in der nullten Beugungsordnung. Die farbgebenden Prägestrukturen sind dann besonders farbintensiv, können lagegenau zu anderen Sicherheitsprägestrukturen angeordnet werden und erscheinen in Aufsieht unter einem relativ breiten Betrachtungswinkel im gewünschten gleichmäßigen Farbton.

Mögliche Parameter von zweidimensional periodischen Gittern sind:

| **Struktur** | **p [nm]** | **s [nm]** | **h [nm]** | **t** [**nm**] |
|---|---|---|---|---|
| a) | 400 | 120 | 300 | 40 |
| b) | 240 | 117 | 300 | 40 |
| c) | 330 | 167 | 300 | 40 |
| d) | 400 | 203 | 310 | 40 |
| e) | 240 | 117 | 300 | 20 |

Die Strukturen a) - e) wurden auf PET-Folien in UV-Lack abgeformt, mit Aluminium bedampft und anschließend mit einer PET-Folie kaschiert. Die Brechzahl der PET-Folie sowie des UV-Lacks beträgt im Sichtbaren etwa 1,56.

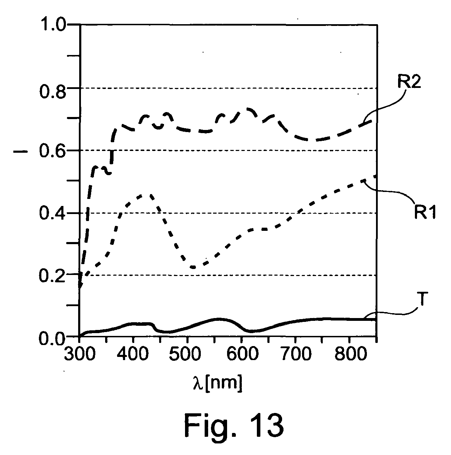

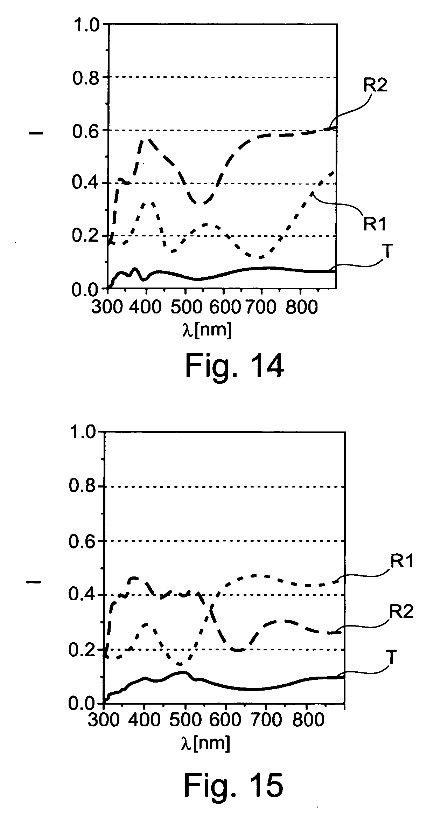

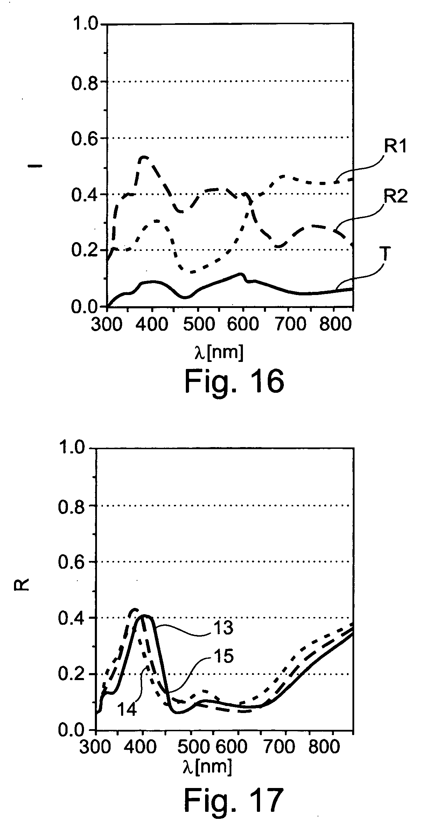

Fig. 13 zeigt Transmissions- bzw. Reflexionsverhalten für Struktur a). Dabei ist mit R der Reflexionsverlauf an der ersten Deckseite, mit R2 der Reflexionsverlauf an der zweiten Deckseite sowie mit T die transmittierte Strahlung bezeichnet. Die Figuren zeigen jeweils die Intensität I als Funktion der Wellenlänge. Als Metall wurde Aluminium mit einer Schichtdicke t von 40 nm verwendet. Fig. 14 zeigt die Verläufe für die Struktur b), Fig. 15 für die Struktur c) und Fig. 16 für Struktur d).

Diese Gittergrundstrukturen zeigen sowohl in Reflexion als auch in Transmission unterschiedliche Farben. Die Reflexion an der ersten Deckseite unterscheidet sich ganz deutlich von der Reflexion an der zweiten Deckseite. Dies tritt am deutlichsten bei der Struktur c) (Fig. 15) und d) (Fig. 16) hervor. Fig. 15 belegt an der ersten Deckseite einen roten Farbton, während die zweite Deckseite blau erscheint. Die Transmission ist dagegen von beiden Seiten betrachtet blau. Die Struktur d) der Fig. 16 erscheint dagegen auf der ersten Deckseite rötlich, auf der zweiten Deckseite türkis und in Transmission grün. Die Winkeltoleranz des Farbtons wurde durch Reflexionsmessungen bei unterschiedlichen Einfallswinkeln untersucht. Fig. 17 zeigt die Reflexion der Struktur e) für die Einfallswinkel 8° (Kurve 13), 30° (Kurve 15) und 45° (Kurve 14). Das Reflexionsmaximum liegt für diese Struktur im Blauen und verschiebt sich bei einer Variation des Einfallswinkels nur geringfügig. Die Struktur erscheint für diese unterschiedlichen Einfallswinkel stets blau.

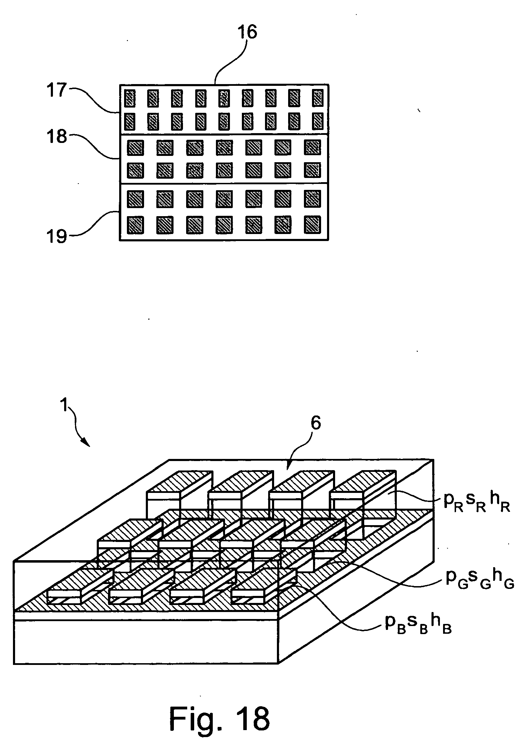

Die oben beschriebene profilabhängige Farbgebung kann benutzt werden, um farbige Symbole bzw. Bilder innerhalb eines der Bereiche zu erzeugen. Fig. 18 zeigt drei Abschnitte 17,18, 19 einer Gittergrundstruktur mit unterschiedlichem Profil (p_{R}, S_{R}, h_{R}), (pc, s_{G}, h_{G}) bzw. (p_{B}, s_{B}, h_{B}), welche in den Farben Rot, Grün und Blau erscheinen. Diese unterschiedlichen Farben können durch die entsprechende Variation eines oder mehrerer Profilparameter hervorgerufen werden.

Die drei Abschnitte 17,18,19 entsprechen RGB-Subpixeln und bilden zusammen ein Pixel 16. In jedem Abschnitt 17, 18, 19 sorgt das jeweilige Profil dafür, dass die entsprechenden Farben Rot, Grün bzw. Blau bewirkt werden. Gleichzeitig kann durch die Profil wähl der Anteil der Farbe des jeweiligen RGB-Subpixels, das vom Abschnitt 17,18 oder 19 gebildet wird, im Pixel 16 eingestellt werden. Somit kann dem Pixel 16 eine gewünschte Farbe verliehen werden. Durch die im Pixel 16 bewirkte Farbmischung der Grundfarben durch die Abschnitte 17, 18, 19 der RGB-Sübpixel werden somit Echtfarbenbilder möglich. Der Vorteil einer solchen Struktur gegenüber einer herkömmlichen Drucktechnik ist, dass eine sehr feine Strukturierung bis in den Mikrometerbereich möglich ist, was insbesondere mit Vergrößerungsanordnungen vorteilhaft ist. Die Gittergrundstruktur 1 gemäß Fig. 12 erlaubt Mikrobilder, bei denen sich das Gitterprofil lateral ändert, um einen farblichen bzw. einen Intensitätskontrast im Mikrobild zu erzielen. Die hier beschriebene Struktur eignet sich dafür bevorzugt, da ihre optischen Eigenschaften sehr winkeltolerant sind, d.h. ihre Farbe ändert sich kaum bei einer Variation des Einfallswinkels. Diese Eigenschaft ist bei einer Kombination mit Mikrolinsenarrays vorteilhaft, da das von einem Betrachter wahrgenommene Licht aus unterschiedlichen Lichtpfaden, welche verschiedene Einfallswinkel haben, stammt.

In den Bereichen I und II unterscheiden sich die Bilder dann nur hinsichtlich ihres Farbspiels in Draufsicht; im Durchlicht verschwinden diese Unterschiede.

Für das Sicherheitselement 20 eignen sich bevorzugt Subwellenlängengitter, also Gittergrundstrukturen 1, die Gitterelemente (beispielsweise Gitterstege 23 und Gitterspalten 24) haben, von denen mindestens eine kleiner ist als die Wellenlänge des Lichts. Die Herstellung solcher Strukturen erfolgt üblicherweise mit photolithographischen Verfahren. Auch Interferenzlithographie oder mechanisches Ritzen ist möglich. Letztlich wird ein Original hergestellt, dass anschließend galvanisch oder mit Hilfe von Photopolymeren (z.B. Ormocere) in einen Prägestempel umkopiert wird, mit dem dann der Träger 2 geprägt wird. Anschließend wird der Träger 2 geeignet beschichtet und gegebenenfalls mit Kaschierschichten versehen.

Die Herstellung des Sicherheitselementes 20 mit an der Gitterebene gespiegelten Bereichen I und II der Gittergrundstruktur 1 kann dadurch erfolgen, dass der erste Bereich eines Originals mit einem Abdruck dieses Originals zusammengesetzt wird. Auch auf diese Weise kann der Prägestempel hergestellt werden. Die Kopien der beiden Bereiche können z.B. durch die Belichtung eines Films aus Photopolymeren durch eine Maske erzeugt und anschießend in einem weiteren Kopierschritt zusammengesetzt werden. Natürlich kann man die entsprechende Inversion auch bereits im Original vorsehen.

Für das Prägen des Trägers 2 kann ein kontinuierlicher Prägeprozess zum Prägen einer Folie verwendet werden. Dazu wird üblicherweise ein Prägezylinder gefertigt.

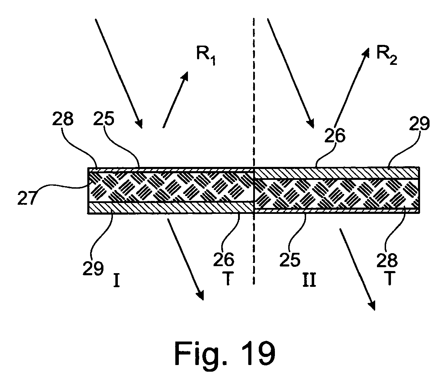

Fig. 19 zeigt in schematischer Schnittdarstellung eine weitere mögliche Realisierungsform für das Sicherheitselement 20. Hier wird als Grundelementstruktur G ein Interferenzaufbau verwendet, der hier als Dreischichtaufbau mit einem Substrat 27 und zwei halbtransparenten Metallschichten 28 und 29 ausgeführt ist. In den Bereichen I und II ist die Grundelementstruktur gegeneinander bezogen auf die Mittelebene gespiegelt, so dass im Bereich I die erste Deckseite 25, im Bereich II hingegen die zweite Deckseite 26 in der Darstellung der Figur oben liegt. Analoges gilt für die unten liegenden Seiten. Dadurch liegt die erste Metallschicht 28 im Bild der Fig. 19 oben für den Bereich I, unten für den Bereich II. Aufgrund der Reziprozität ist die Transmission in beiden Bereichen identisch, die Reflexionseigenschaften unterscheiden sich, wodurch das Motiv erkennbar ist.

Es sei noch darauf hingewiesen, dass die Stufe im Substrat 27, die zwischen den Bereichen I und II zu sehen ist, tatsächlich nicht vorhanden ist. Sie verdeutlicht lediglich die Spiegelung der Grundstruktur G in den Bereichen I und II. Tatsächlich läuft das Substrat 27 durch und lediglich die Schichten 28 und 29 wechseln. Diese bereichsweise unterschiedliche Strukturierung kann durch ein Waschverfahren oder auch durch Laserdemetallisierung erzielt werden. Hierbei wird zuerst der Bereich II maskiert und die Schichtfolge für den Bereich I aufgebracht, beispielsweise durch ein Bedampfungsverfahren. Im nächsten Schritt wird der Bereich I maskiert und die Schichtfolge des Bereiches II aufgedampft.

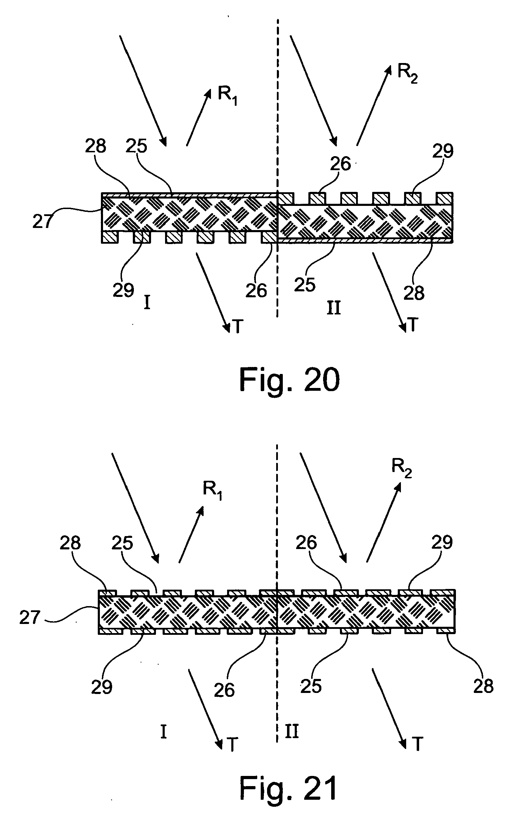

Es ist auch denkbar, dass eine dieser Metallschichten perforiert ist. Diese Ausführungsform sieht man in Fig. 20. Bei bekannten Color-Shift-Schichtsystemen ist üblicherweise die untere Schicht als opake Spiegelschicht ausgelegt. Um jedoch eine Transmission zu erhalten, kann diese Spiegelschicht teilweise perforiert vorliegen. Die halbtransparente Metallschicht 28 ist homogen, die Spiegelschicht 29 perforiert: Diese Perforierung kann mit Hilfe eines gepulsten Lasers erzeugt werden. Alternativ kann ein Waschverfahren, ein Metalltransferverfahren oder ein sogenanntes Lift-off- Verfahren verwendet werden.

Fig. 21 zeigt eine Grundelementstruktur G, bei der beide Schichten 28 und 29 aus demselben Material gefertigt sind und dieselbe Dicke haben. Sie sind lediglich unterschiedlich perforiert, wodurch sich die unterschiedlichen Reflexionseigenschaften einstellen. Die Herstellung dieser Variante ist besonders einfach, denn die einzelnen Schichten können lateral unstrukturiert und vollflächig nacheinander aufgebracht werden. Die Perforierung wird dann mit Hilfe eines gepulsten Lasers ausgeführt. Dies ist auf beiden Seiten möglich. Alternativ kann die Perforierung einseitig nach dem Aufbringen der einen Metallschicht und dann nach dem Aufbringen der anderen Metallschicht erfolgen.

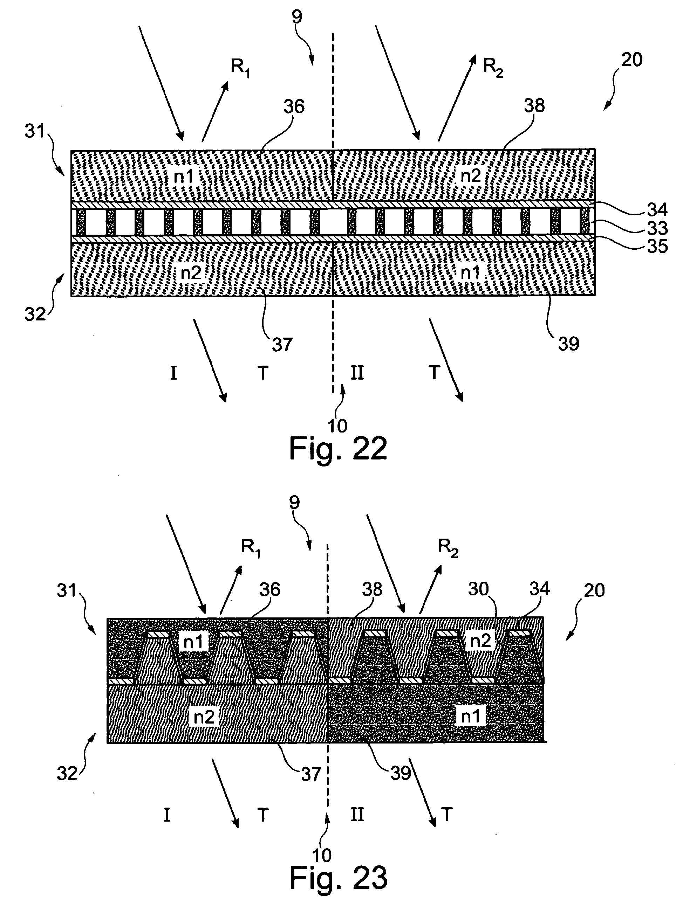

Fig. 22 zeigt eine Abwandlung der Bauweise der Fig. 19. Hier ist das Sicherheitselement in den Bereichen I und II hinsichtlich seiner Brechzahlstruktur invertiert und nicht hinsichtlich der Geometrie gespiegelt.

Das Sicherheitselement 20 der Fig. 22 weist ein Dielektrikum 33 auf, das an seiner Vorder- und Rückseite jeweils eine Metallisierung 34, 35 hat. Über der Metallisierung 34 ist eine Deckschicht 31 aufgebracht, und unter der Metallisierung 35 eine Unterschicht 32.

Die Deckschicht 31 weist zwei Schichtabschnitte 36 und 38 auf, wobei der Schichtabschnitt 36 im Bereich I und der Schichtabschnitt 38 im Bereich II liegt. Gleichermaßen ist die Unterschicht 32 entsprechend strukturiert, so dass sie im Bereich I einen Schichtabschnitt 37 und im Bereich II einen Schichtabschnitt 39 hat. Die Schichtabschnitte 36 und 39 haben dieselbe Brechzahl n1. Gleichermaßen haben die Schichtabschnitte 37 und 38 dieselbe Brechzahl n2, die sich von der Brechzahl n1 unterscheidet. Dadurch liegen im Bereich I dieselben Schichten vor, wie im Bereich II, jedoch hinsichtlich ihrer Brechzahlstruktur invertiert. Dies führt zu einer Wechselwirkung des einfallenden Lichtes in den Bereichen I und II auch bei einem ebenen, halbtransparenten Metallschichtaufbau. Im Bereich I grenzt das Schichtsystem, gebildet durch die Schichten 33 bis 35, nach oben an den Schichtabschnitt 36 mit der Brechzahl n1 und nach unten an den Schichtabschnitt 37 mit der Brechzahl n2. Im Bereich II sind die Brechzahlen von der Vorder- bzw. Rückseite vertauscht. Dies führt zu einem unterschiedlichen Reflexionsverhalten in den beiden Bereichen. Die Transmission ist hingegen identisch.

Grenzflächen mit unterschiedlichen Brechzahlen können durch Aufdampfen bzw. durch Bedrucken unterschiedlicher Dielektrika hergestellt werden. Die oben anhand der anderen Ausführungsformen beschriebenen Maßnahmen sind sämtlich auch hier geeignet, lateral unterschiedliche Schichtabschnitte mit gewünschten Brechzahlen einzustellen.

In Fig. 22 sind Deckschicht 31 und Unterschicht 32 mit gleicher Geometrie dargestellt. Dies ist nicht zwingend erforderlich. So kann durchaus die Deckschicht 31 eine andere Struktur oder Dicke haben, als die Unterschicht 32.

Fig. 23 zeigt eine Bauweise gemäß der eingangs als zweite Variante bezeichneten Möglichkeit, ein Sicherheitselement zu gestalten. Hier ist, wie auch in Fig. 22, eine Inversion hinsichtlich der Brechzahlstruktur und nicht hinsichtlich der Geometrie (wie in der ersten Variante) vorgesehen. Das Sicherheitselement 20 der Fig. 23 hat eine Gitterstruktur 30, die mit einer Metallisierung 34 versehen ist. Die über der Gitterstruktur 30 angeordnete Deckschicht 31 füllt die Gitterstruktur auf. Gleiches gilt für die auf der anderen Seite liegende Unterschicht 32.

Die Gitterstruktur 30 ist exemplarisch als Reliefgitter mit trapezförmigem Querschnitt dargestellt. Jedoch können sämtliche hier beschriebene Gitterstrukturen, auch die Gitterstrukturen, welche im Zusammenhang mit der ersten Variante erwähnt wurden, verwendet werden. Im Unterschied zur ersten Variante stellt nun nicht (ausschließlich) eine Variation der Profilform der Gitterstruktur 30 das unterschiedliche Reflexionsverhalten in den Bereichen I und II her, sondern ein Wechsel in der Brechzahl. Die Deckschicht 31 hat in den Schichtabschnitten 36 und 38 unterschiedliche Brechzahlen, nämlich die Brechzahlen n1 und n2. In der Unterschicht 32 sind die Brechzahlen genau dazu invertiert, so dass der Schichtabschnitt 37 die Brechzahl n2 und der Schichtabschnitt 39 die Brechzahl n1 hat. Somit wird mit einer Gitterstruktur 30, die in den Bereichen I und II homogen ist, ein unterschiedliches Reflexionsverhalten erzielt, da der Brechzahlsprung zwischen dem Schichtabschnitt 36 und der Kombination aus Metallisierung 37 und Gitterstruktur 30 eine Reflexionsverhalten an der Vorderseite im Bereich I zeigt, das dem an der Rückseite im Bereich II entspricht. Analoges gilt für die Vorderseite des Bereiches II und die Rückseite des Bereiches I. Anders als bei der zuvor beschriebenen ersten Variante ist also in der zweiten Variante nicht die Geometrie in den Bereichen I und II, sondern die Anordnung der Brechzahlen vertauscht.

Natürlich kann man die Maßnahmen der ersten Variante und der zweiten Variante kombinieren solange der Gegenstand unter den Ansprüchen fällt, so dass das unterschiedliche Reflexionsverhalten von Vorder- und Rückseite sowie der in Transmission nicht mehr erkennbare Unterschied zwischen den Bereichen I und II sowohl durch eine Invertierung der Geometrie als auch durch eine Invertierung des Brechzahlquerschnitts erreicht werden kann.

Grundsätzlich kann das Substrat 27 eingefärbt sein, um in Transmission einen farbigen Effekt zu erzeugen.

### Bezugszeichenliste

- 1: Gitter
- 2: Träger
- 3: Grundschicht
- 4: Säule
- 5: Beschichtung
- 6: Muster
- 7: Dielektrikum
- 8: Loch
- 9: Vorderseite
- 10: Rückseite
- 11, 12: Mehrschichtaufbau
- 13, 14, 15: Kurve
- 16: Pixel
- 17, 18, 19: Abschnitt
- 20: Sicherheitselement
- 21: Hintergrund
- 22: Vordergrund
- 23: Gittersteg
- 24: Gitterspalt
- 25: erste Deckseite
- 26: zweite Deckseite
- 27: Substrat
- 28, 29: Interferenzschichten
- 30: Gitterstruktur
- 31: Deckschicht
- 32: Unterschicht
- 33: Dielektrikum
- 34, 35: Metallisierung
- 36-39: Schichtabschnitt
- h: Säulenhöhe
- G: Grundelementstruktur
- M: Mittelebene
- t: Beschichtungsdicke
- s₁: Säulenbreite
- s₂: Säulentiefe
- p₁, p₂: Periode
- A: Flächennormale
- E: einfallende Strahlung
- R: reflektierte Strahlung
- R1: reflektierte Strahlung
- R2: reflektierte Strahlung
- T: transmittierte Strahlung

## Patentansprüche

1. Sicherheitselement für einen Wertgegenstand, das aufweist:
- einen flachen, transparenten Körper mit einer Vorder- und einer Rückseite, zwischen denen eine Mittelebene (M) liegt,
- einen am Körper ausgebildeten, ersten Bereich (I) und einen am Körper ausgebildeten, zweiten Bereich (II), die ein Motiv (21, 22) codieren, wobei
- der Körper im ersten Bereich eine Grundelementstruktur (G) aufweist, die in Draufsicht auf den Körper von Vorder- und Rückseite unterschiedliche Farbeindrücke vermittelt **dadurch gekennzeichnet, dass** die Grundelementstrucktur als eine Gittergrundstruktur realisiert ist (30) oder als Substrat, das auf seinen Deckflächen unterschiedliche Interferenzschichten (28, 29) aufweist, und dass
- der Körper im zweiten Bereich (II) ebenfalls die Grundelementstruktur (G) aufweist, allerdings in bezogen auf die Mittelebene (M) gespiegelter Form, wodurch erster und zweiter Bereich (I, II) in Draufsicht von beiden Seiten das Motiv (21, 22) zeigen, in Durchsicht das Motiv (21, 22) aber nicht erkennbar ist.

2. Sicherheitselement nach Anspruch 1, **dadurch gekennzeichnet, dass** die Gittergrundstruktur (1) bezogen auf die Mittelebene (M) asymmetrisch ist.

3. Sicherheitselement nach Anspruch 2, **dadurch gekennzeichnet, dass** die Gittergrundstruktur (1) im Profil trapezförmige oder dreieckige Gitterelemente (23) aufweist.

4. Sicherheitselement nach Anspruch 2 oder 3, **dadurch gekennzeichnet, dass** die Gittergrundstruktur (1) eine Gitterperiode von 100 nm bis 1000 nm, bevorzugt von 200 nm und 500 nm hat.

5. Sicherheitselement nach einem der Ansprüche 2 bis 4, **dadurch gekennzeichnet, dass** die Gittergrundstruktur (1) mit einer dünnen Metallschicht, einer Halbmetallschicht oder einer hochbrechenden Schicht mit teilweise absorbierender Wirkung überzogen ist.

6. Sicherheitselement nach einem der Ansprüche 2 bis 5, **dadurch gekennzeichnet, dass** die Gittergrundstruktur (1) zweidimensional periodisch ist.

7. Sicherheitselement nach einem der Ansprüche 2 bis 6, **dadurch gekennzeichnet, dass** die Gittergrundstruktur (1) quaderförmige Erhebungen (5) und Vertiefungen (8) aufweist.

8. Sicherheitselement nach Anspruch 6 oder nach einer Kombination der Ansprüche 6 und 7, **dadurch gekennzeichnet, dass** die Gittergrundstruktur eine zusammenhängende, teilweise absorbierende Grundschicht (3), die eine Gitterebene definiert, und über der Grundschicht (3) ein zweidimensional regelmäßiges Muster (6) aus einzelnen teilweise absorbierenden Flächenelementen (5) aufweist, die sich jeweils parallel zur Gitterebene erstrecken und jeweils von der Grundschicht (3) durch ein Zwischen-Dielektrikum (4) um einen Abstand (h) beabstandet sind, der größer ist als die Dicke der Grundschicht (3) und der Flächenelemente (5).

9. Sicherheitselement nach Anspruch 8, **dadurch gekennzeichnet, dass** das regelmäßige Muster (6) in mindestens zwei Richtungen, die parallel zur Gitterebene verlaufen, eine Periodizität (p₁, p₂) zwischen 100 nm und 800 nm, bevorzugt zwischen 200 nm und 500 nm hat.

10. Sicherheitselement nach Anspruch 8 oder 9, **dadurch gekennzeichnet, dass** die Grundschicht (3) unter jedem Flächenelement (5) eine Öffnung (8) hat.

11. Sicherheitselement nach einem der Ansprüche 8 bis 10, **dadurch gekennzeichnet, dass** die Grundschicht (3) und die Flächenelemente (5) ein Material umfassen, das enthält: AI, Ag, Cu, Cr, Si, Zn, Ti, Pt, Pd, Ta oder eine Legierung daraus.

12. Sicherheitselement nach einem der Ansprüche 8 bis 11, **dadurch gekennzeichnet, dass** das Zwischen-Dielektrikum (4) unter jedem Flächenelement (5) als Säule ausgebildet ist, auf der das Flächenelement (5) angeordnet ist, und vorzugsweise eine Brechzahl zwischen 1,4 und 1,6 hat.

13. Sicherheitselement nach einem der Ansprüche 8 bis 12, **dadurch gekennzeichnet, dass** die Gittergrundstruktur (1) in ein Einbett-Dielektrikum (7) eingebettet ist, welches vorzugsweise dieselbe Brechzahl hat wie das Zwischen-Dielektrikum (4).

14. Sicherheitselement nach einem der Ansprüche 8 bis 13, **dadurch gekennzeichnet, dass** das regelmäßige Muster (6) der Flächenelemente (5) einen Flächenfüllfaktor von größer 0,5 bis 0,85, bevorzugt bis 0,7 hat.

15. Sicherheitselement nach einem der Ansprüche 8 bis 14, **dadurch gekennzeichnet, dass** der Abstand (h), in dem die Flächenelemente (5) über der Gitterebene liegen, parallel zur Gitterebene variiert.

16. Sicherheitselement nach Anspruch 1, **dadurch gekennzeichnet, dass** die Grundelementstruktur (G) ein Substrat (27) und zwei unterschiedliche, auf Deckseiten des Trägers angeordnete Interferenzschichten (28, 29) aufweist.

17. Sicherheitselement für einen Wertgegenstand, das aufweist:
- einen flachen, transparenten Körper mit einer Vorder- und einer Rückseite,
- einen am Körper ausgebildeten, ersten Bereich (I) und einen am Körper ausgebildeten, zweiten Bereich (II), die ein Motiv (21, 22) codieren, wobei
- der Körper eine Gittergrundstruktur (30) aufweist, die von der Vorderseite mit einer ersten Schicht (31) und von der Rückseite mit einer zweiten Schicht (32) aufgefüllt ist, und die in Draufsicht von Vorderund Rückseite, unterschiedliche Farbeindrücke vermittelt,
**dadurch gekennzeichnet, dass**
- die Gittergrundstruktur (30) im ersten und im zweiten Bereich (I, II) gleich ist, und
- im ersten Bereich (I) die erste Schicht (31) eine erste Brechzahl (n1) und die zweite Schicht (32) eine zweite Brechzahl (n2) hat, und im zweiten Bereich (II) die erste Schicht (31) die zweite Brechzahl (n2) und die zweite Schicht (32) die erste Brechzahl (n1) hat, wodurch erster und zweiter Bereich (I, II) in Draufsicht von beiden Seiten das Motiv (21, 22) zeigen, in Durchsicht das Motiv (21, 22) aber nicht erkennbar ist.

18. Sicherheitselement nach Anspruch 17, **dadurch gekennzeichnet, dass** die Gittergrundstruktur (30) bezogen auf eine zwischen Vorder- und einer Rückseite liegende Mittelebene (M) asymmetrisch ist.

19. Sicherheitselement nach Anspruch 17 oder 18, **dadurch gekennzeichnet, dass** die Gittergrundstruktur (30) im Profil trapezförmige oder dreieckige Gitterelemente (23) aufweist.

20. Sicherheitselement nach einem der Ansprüche 17 bis 19, **dadurch gekennzeichnet, dass** die Gittergrundstruktur (30) eine Gitterperiode von 100 nm bis 1000 nm, bevorzugt von 200 nm und 500 nm hat.

21. Sicherheitselement nach einem der Ansprüche 17 bis 20, **dadurch gekennzeichnet, dass** die Gittergrundstruktur (30) mit einer dünnen Metallschicht, einer Halbmetallschicht oder einer hochbrechenden Schicht mit teilweise absorbierender Wirkung überzogen ist.

22. Sicherheitselement nach einem der Ansprüche 17 bis 21, **dadurch gekennzeichnet, dass** die Gittergrundstruktur (30) zweidimensional periodisch ist.

23. Sicherheitselement nach einem der Ansprüche 17 bis 22, **dadurch gekennzeichnet, dass** die Gittergrundstruktur (1) quaderförmige Erhebungen (5) und Vertiefungen (8) aufweist.

24. Sicherheitselement nach Anspruch 22 oder nach einer Kombination der Ansprüche 22 und 23, **dadurch gekennzeichnet, dass** die Gittergrundstruktur eine zusammenhängende, teilweise absorbierende Grundschicht (3), die eine Gitterebene definiert, und über der Grundschicht (3) ein zweidimensional regelmäßiges Muster (6) aus einzelnen teilweise absorbierenden Flächenelementen (5) aufweist, die sich jeweils parallel zur Gitterebene erstrecken und jeweils von der Grundschicht (3) durch eine Zwischenschicht (4) um einen Abstand (h) beabstandet sind, der größer ist als die Dicke der Grundschicht (3) und der Flächenelemente (5).

25. Sicherheitselement nach Anspruch 24, **dadurch gekennzeichnet, dass** das regelmäßige Muster (6) in mindestens zwei Richtungen, die parallel zur Gitterebene verlaufen, eine Periodizität (p₁, p₂) zwischen 100 nm und 800 nm, bevorzugt zwischen 200 nm und 500 nm hat.

26. Sicherheitselement nach Anspruch 24 oder 25, **dadurch gekennzeichnet, dass** die Grundschicht (3) unter jedem Flächenelement (5) eine Öffnung (8) hat.

27. Sicherheitselement nach einem der Ansprüche 24 bis 26, **dadurch gekennzeichnet, dass** die Grundschicht (3) und die Flächenelemente (5) ein Material umfassen, das enthält: Al, Ag, Cu, Cr, Si, Zn, Ti, Pt, Pd, Ta oder eine Legierung daraus.

28. Sicherheitselement nach einem der Ansprüche 24 bis 27, **dadurch gekennzeichnet, dass** die Zwischenschicht (4) unter jedem Flächenelement (5) als Säule ausgebildet ist, auf der das Flächenelement (5) angeordnet ist, und vorzugsweise eine Brechzahl zwischen 1,4 und 1,6 hat.

29. Sicherheitselement nach einem der Ansprüche 24 bis 28, **dadurch gekennzeichnet, dass** das regelmäßige Muster (6) der Flächenelemente (5) einen Flächenfüllfaktor von größer 0,5 bis 0,85, bevorzugt bis 0,7 hat.

30. Sicherheitselement nach einem der Ansprüche 24 bis 29, **dadurch gekennzeichnet, dass** der Abstand (h), in dem die Flächenelemente (5) über der Gitterebene liegen, parallel zur Gitterebene variiert.

## Claims

1. A security element for an object of value, which has:
- a flat, transparent body having a front side and a back side between which there lies a center plane (M),
- a first region (I) configured on the body and a second region (II) configured on the body which encode a motif (21, 22), wherein
- the body has in the first region a ground element structure (G) which conveys different color impressions from front and back sides in plan view of the body,
**characterized in that**
- the ground element structure is realized as a grating ground structure (30) or as a substrate which has different interference layers (28, 29) on its cover surfaces, and that
- the body likewise has the ground element structure (G) in the second region (II) but in mirrored form relative to the center plane (M), causing first and second regions (I, II) to show the motif (21, 22) from both sides in plan view, but the motif (21, 22) to be unrecognizable in transmission view.

2. The security element according to claim 1, **characterized in that** the grating ground structure (1) is asymmetrical relative to the center plane (M).

3. The security element according to claim 2, **characterized in that** the grating ground structure (1) has grating elements (23) of trapezoidal or triangular profile.

4. The security element according to claim 2 or 3, **characterized in that** the grating ground structure (1) has a grating period of 100 nm to 1000 nm, preferably of 200 nm and 500 nm.

5. The security element according to any of claims 2 to 4, **characterized in that** the grating ground structure (1) is overlaid with a thin metal layer, a semimetal layer or a high-refractive layer with a partly absorbent effect.

6. The security element according to any of claims 2 to 5, **characterized in that** the grating ground structure (1) is two-dimensionally periodic.

7. The security element according to any of claims 2 to 6, **characterized in that** the grating ground structure (1) has cuboid elevations (5) and depressions (8).

8. The security element according to claim 6 or according to a combination of claims 6 and 7, **characterized in that** the grating ground structure has a contiguous, partly absorbent ground layer (3) which defines a grating plane, and over the ground layer (3) a two-dimensionally regular pattern (6) of individual partly absorbent surface elements (5) which respectively extend parallel to the grating plane and are respectively spaced from the ground layer (3) by an interlevel dielectric (4) by a distance (h) that is greater than the thickness of the ground layer (3) and of the surface elements (5).

9. The security element according to claim 8, **characterized in that** the regular pattern (6) has a periodicity (p₁, p₂) between 100 nm and 800 nm, preferably between 200 nm and 500 nm, in at least two directions extending parallel to the grating plane.

10. The security element according to claim 8 or 9, **characterized in that** the ground layer (3) has an opening (8) under each surface element (5).

11. The security element according to any of claims 8 to 10, **characterized in that** the ground layer (3) and the surface elements (5) comprise a material containing: Al, Ag, Cu, Cr, Si, Zn, Ti, Pt, Pd, Ta or an alloy thereof.

12. The security element according to any of claims 8 to 11, **characterized in that** the interlevel dielectric (4) is configured under each surface element (5) as a pillar on which the surface element (5) is disposed, and preferably has a refractive index between 1.4 and 1.6.

13. The security element according to any of claims 8 to 12, **characterized in that** the grating ground structure (1) is embedded into an embedding dielectric (7) which preferably has the same refractive index as the interlevel dielectric (4).

14. The security element according to any of claims 8 to 13, **characterized in that** the regular pattern (6) of the surface elements (5) has a surface filling factor of greater than 0.5 to 0.85, preferably to 0.7.

15. The security element according to any of claims 8 to 14, **characterized in that** the distance (h) at which the surface elements (5) lie over the grating plane varies parallel to the grating plane.

16. The security element according to claim 1, **characterized in that** the ground element structure (G) has a substrate (27) and two different interference layers (28, 29) disposed on cover sides of the carrier.

17. A security element for an object of value, which has:
- a flat, transparent body having a front side and a back side,
- a first region (I) configured on the body and a second region (II) configured on the body which encode a motif (21, 22), wherein
- the body has a grating ground structure (30) which is filled with a first layer (31) from the front side and with a second layer (32) from the back side, and which conveys different color impressions from front and back sides in plan view,
**characterized in that**
- the grating ground structure (30) is the same in the first and second regions (I, II), and
- in the first region (I) the first layer (31) has a first refractive index (n1) and the second layer (32) a second refractive index (n2), and in the second region (II) the first layer (31) has the second refractive index (n2) and the second layer (32) the first refractive index (n1), causing first and second regions (I, II) to show the motif (21, 22) from both sides in plan view, but the motif (21, 22) to be unrecognizable in transmission view.

18. The security element according to claim 17, **characterized in that** the grating ground structure (30) is asymmetrical relative to a center plane (M) lying between front and back sides.

19. The security element according to claim 17 or 18, **characterized in that** the grating ground structure (30) has grating elements (23) of trapezoidal or triangular profile.

20. The security element according to any of claims 17 to 19, **characterized in that** the grating ground structure (30) has a grating period of 100 nm to 1000 nm, preferably of 200 nm and 500 nm.

21. The security element according to any of claims 17 to 20, **characterized in that** the grating ground structure (30) is overlaid with a thin metal layer, a semimetal layer or a high-refractive layer with a partly absorbent effect.

22. The security element according to any of claims 17 to 21, **characterized in that** the grating ground structure (30) is two-dimensionally periodic.

23. The security element according to any of claims 17 to 22, **characterized in that** the grating ground structure (1) has cuboid elevations (5) and depressions (8).

24. The security element according to claim 22 or according to a combination of claims 22 and 23, **characterized in that** the grating ground structure has a contiguous, partly absorbent ground layer (3) which defines a grating plane, and over the ground layer (3) a two-dimensionally regular pattern (6) of individual partly absorbent surface elements (5) which respectively extend parallel to the grating plane and are respectively spaced from the ground layer (3) by an intermediate layer (4) by a distance (h) that is greater than the thickness of the ground layer (3) and of the surface elements (5).

25. The security element according to claim 24, **characterized in that** the regular pattern (6) has a periodicity (p₁, p₂) between 100 nm and 800 nm, preferably between 200 nm and 500 nm, in at least two directions extending parallel to the grating plane.

26. The security element according to claim 24 or 25, **characterized in that** the ground layer (3) has an opening (8) under each surface element (5).

27. The security element according to any of claims 24 to 26, **characterized in that** the ground layer (3) and the surface elements (5) comprise a material containing: Al, Ag, Cu, Cr, Si, Zn, Ti, Pt, Pd, Ta or an alloy thereof.

28. The security element according to any of claims 24 to 27, **characterized in that** the intermediate layer (4) is configured under each surface element (5) as a pillar on which the surface element (5) is disposed and preferably has a refractive index between 1.4 and 1.6.

29. The security element according to any of claims 24 to 28, **characterized in that** the regular pattern (6) of the surface elements (5) has a surface filling factor of greater than 0.5 to 0.85, preferably to 0.7.

30. The security element according to any of claims 24 to 29, **characterized in that** the distance (h) at which the surface elements (5) lie over the grating plane varies parallel to the grating plane.

## Revendications

1. Élément de sécurité destiné à un objet de valeur, comportant:
- un corps transparent plat ayant une face recto et une face verso entre lesquelles se trouve un plan médian (M),
- une première zone (I) réalisée au corps et une deuxième zone (II) réalisée au corps, lesquelles codent un motif (21, 22), cependant que
- le corps comporte, dans la première zone, une structure d'élément de base (G) qui, en vue de dessus du corps, offre de la face recto et de la face verso des impressions de couleur différentes,
**caractérisé en ce que**
- la structure d'élément de base est réalisée sous forme d'une structure réticulaire de base (30) ou sous forme de substrat comportant sur ses surfaces de couverture différentes couches interférentielles (28, 29), et **en ce que**
- le corps comporte, dans la deuxième zone (II), également une structure d'élément de base (G), mais sous forme inversée par rapport au plan médian (M), ce qui a pour effet que la première et la deuxième zone (I, II) présentent en vue de dessus des deux faces le motif (21, 22), mais que le motif (21, 22) n'est pas reconnaissable en transmission.

2. Élément de sécurité selon la revendication 1, **caractérisé en ce que** la structure réticulaire de base (1) est asymétrique par rapport au plan médian (M).

3. Élément de sécurité selon la revendication 2, **caractérisé en ce que** la structure réticulaire de base (1) présente, de profil, des éléments réticulaires (23) trapézoïdaux ou triangulaires.

4. Élément de sécurité selon la revendication 2 ou 3, **caractérisé en ce que** la structure réticulaire de base (1) a une période réticulaire située entre 100 nm et 1000 nm, de préférence entre 200 nm et 500 nm.

5. Élément de sécurité selon une des revendications de 2 à 4, **caractérisé en ce que** la structure réticulaire de base (1) est recouverte d'une fine couche métallique, d'une couche semi-métallique ou d'un couche hautement réfringente à effet partiellement absorbant.

6. Élément de sécurité selon une des revendications de 2 à 5, **caractérisé en ce que** la structure réticulaire de base (1) est bi-dimensionnellement périodique.

7. Élément de sécurité selon une des revendications de 2 à 6, **caractérisé en ce que** la structure réticulaire de base (1) comporte des rehaussements (5) et renfoncements (8) parallélépipédiques.

8. Élément de sécurité selon la revendication 6 ou selon une combinaison des revendications 6 et 7, **caractérisé en ce que** la structure réticulaire de base comporte une couche de base (3) d'un seul tenant partiellement absorbante qui définit un plan réticulaire et, au-dessus de la couche de base (3), un dessin (6) régulier bi-dimensionnel formé par des éléments de surface (5) distincts partiellement absorbants qui s'étendent respectivement parallèlement au plan réticulaire et sont respectivement, par un diélectrique intermédiaire (4), espacés de la couche de base (3) d'un espacement (h) supérieur à l'épaisseur de la couche de base (3) et des éléments de surface (5).

9. Élément de sécurité selon la revendication 8, **caractérisé en ce que** le dessin (6) régulier a, dans au moins deux directions parallèles au plan réticulaire, une périodicité (p₁, p₂) située entre 100 nm et 800 nm, de préférence entre 200 nm et 500 nm.

10. Élément de sécurité selon la revendication 8 ou 9, **caractérisé en ce que** la couche de base (3) a, sous chaque élément de surface (5), une ouverture (8).

11. Élément de sécurité selon une des revendications de 8 à 10, **caractérisé en ce que** la couche de base (3) et les éléments de surface (5) comprennent un matériau qui contient: Al, Ag, Cu, Cr, Si, Zn, Ti, Pt, Pd, Ta ou un alliage de ceux-ci.

12. Élément de sécurité selon une des revendications de 8 à 11, **caractérisé en ce que** le diélectrique intermédiaire (4) est réalisé, sous chaque élément de surface (5), sous forme de colonne sur laquelle l'élément de surface (5) est agencé, et a de préférence un indice de réfraction situé entre 1,4 et 1,6.

13. Élément de sécurité selon une des revendications de 8 à 12, **caractérisé en ce que** la structure réticulaire de base (1) est encastrée dans un diélectrique d'encastrement (7) qui a préférence le même indice de réfraction que le diélectrique intermédiaire (4).

14. Élément de sécurité selon une des revendications de 8 à 13, **caractérisé en ce que** le dessin (6) régulier des éléments de surface (5) a un facteur de comblement de surface supérieur à 0,5 et allant jusqu'à 0,85, de préférence allant jusqu'à 0,7.

15. Élément de sécurité selon une des revendications de 8 à 14, **caractérisé en ce que** l'espacement (h) auquel les éléments de surface (5) se trouvent au-dessus du plan réticulaire varie parallèlement au plan réticulaire.

16. Élément de sécurité selon la revendication 1, **caractérisé en ce que** la structure d'élément de base (G) comporte un substrat (27) et deux couches interférentielles (28, 29) différentes agencées sur des faces de recouvrement du support.

17. Élément de sécurité destiné à un objet de valeur, comportant:
- un corps transparent plat ayant une face recto et une face verso,
- une première zone (I) réalisée au corps et une deuxième zone (II) réalisée au corps, lesquelles codent un motif (21, 22),
cependant que
- le corps comporte une structure réticulaire de base (30) qui, depuis la face recto, est comblée avec une première couche (31) et qui, depuis la face verso, est comblée avec une deuxième couche (32), et qui, en vue de dessus, offre de la face recto et de la face verso des impressions de couleur différentes,
**caractérisé en ce que**
- la structure réticulaire de base (30) est identique dans la première et la deuxième zone (I, II), et
- dans la première zone (I), la première couche (31) a un premier indice de réfraction (n1) et la deuxième couche (32) a un deuxième indice de réfraction (n2), et, dans la deuxième zone (II), la première couche (31) a le deuxième indice de réfraction (n2) et la deuxième couche (32) a le premier indice de réfraction (n1), ce qui a pour effet que
- la première et la deuxième zone (I, II) présentent en vue de dessus des deux faces le motif (21, 22), mais que le motif (21, 22) n'est pas reconnaissable en transmission.

18. Élément de sécurité selon la revendication 17, **caractérisé en ce que** la structure réticulaire de base (30) est asymétrique par rapport à un plan médian (M) situé entre la face recto et une face verso.

19. Élément de sécurité selon une des revendications 17 ou 18, **caractérisé en ce que** la structure réticulaire de base (30) présente, de profil, des éléments réticulaires (23) trapézoïdaux ou triangulaires.

20. Élément de sécurité selon une des revendications 17 à 19, **caractérisé en ce que** la structure réticulaire de base (30) a une période réticulaire située entre 100 nm et 1000 nm, de préférence entre 200 nm et 500 nm.

21. Élément de sécurité selon une des revendications de 17 à 20, **caractérisé en ce que** la structure réticulaire de base (30) est recouverte d'une fine couche métallique, d'une couche semi-métallique ou d'un couche hautement réfringente à effet partiellement absorbant.

22. Élément de sécurité selon une des revendications de 17 à 21, **caractérisé en ce que** la structure réticulaire de base (30) est bi-dimensionnellement périodique.

23. Élément de sécurité selon une des revendications de 17 à 22, **caractérisé en ce que** la structure réticulaire de base (1) comporte des rehaussements (5) et renfoncements (8) parallélépipédiques.

24. Élément de sécurité selon la revendication 22 ou selon une combinaison des revendications 22 et 23, **caractérisé en ce que** la structure réticulaire de base comporte une couche de base (3) d'un seul tenant partiellement absorbante qui définit un plan réticulaire et, au-dessus de la couche de base (3), un dessin (6) régulier bi-dimensionnel formé par des éléments de surface (5) distincts partiellement absorbants qui s'étendent respectivement parallèlement au plan réticulaire et sont respectivement, par une couche intermédiaire (4), espacés de la couche de base (3) d'un espacement (h) supérieur à l'épaisseur de la couche de base (3) et des éléments de surface (5).

25. Élément de sécurité selon la revendication 24, **caractérisé en ce que** le dessin (6) régulier a, dans au moins deux directions parallèles au plan réticulaire, une périodicité (p₁, p₂) située entre 100 nm et 800 nm, de préférence entre 200 nm et 500 nm.

26. Élément de sécurité selon la revendication 24 ou 25, **caractérisé en ce que** la couche de base (3) a, sous chaque élément de surface (5), une ouverture (8).

27. Élément de sécurité selon une des revendications de 24 à 26, **caractérisé en ce que** la couche de base (3) et les éléments de surface (5) comprennent un matériau qui contient: Al, Ag, Cu, Cr, Si, Zn, Ti, Pt, Pd, Ta ou un alliage de ceux-ci.

28. Élément de sécurité selon une des revendications de 24 à 27, **caractérisé en ce que** la couche intermédiaire (4) est réalisée, sous chaque élément de surface (5), sous forme de colonne sur laquelle l'élément de surface (5) est agencé, et a de préférence un indice de réfraction situé entre 1,4 et 1,6.

29. Élément de sécurité selon une des revendications de 24 à 28, **caractérisé en ce que** le dessin (6) régulier des éléments de surface (5) a un facteur de comblement de surface supérieur à 0,5 et allant jusqu'à 0,85, de préférence allant jusqu'à 0,7.

30. Élément de sécurité selon une des revendications de 24 à 29, **caractérisé en ce que** l'espacement (h) auquel les éléments de surface (5) se trouvent au-dessus du plan réticulaire varie parallèlement au plan réticulaire.
